(19) 

Europäisches
Patentamt

European
Patent Office

Office européen
des brevets

(11) **EP 4 651 480 A1**

(12) **EUROPEAN PATENT APPLICATION**
published in accordance with Art. 153(4) EPC

(43) Date of publication:
**19.11.2025 Bulletin 2025/47**

(21) Application number: **24741644.9**

(22) Date of filing: **08.01.2024**

(51) International Patent Classification (IPC):
**H04N 19/11** (2014.01)   **H04N 19/593** (2014.01)
**H04N 19/105** (2014.01)   **H04N 19/132** (2014.01)
**H04N 19/176** (2014.01)

(52) Cooperative Patent Classification (CPC):
**H04N 19/105; H04N 19/11; H04N 19/132;
H04N 19/176; H04N 19/593**

(86) International application number:
**PCT/KR2024/000327**

(87) International publication number:
**WO 2024/151023 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.01.2023 US 202363437759 P**

(71) Applicant: **LG Electronics Inc.**
**Yeongdeungpo-gu**
**Seoul 07336 (KR)**

(72) Inventors:
• **CHOI, Jangwon**
  **Seoul 06772 (KR)**
• **PARK, Nae Ri**
  **Seoul 06772 (KR)**
• **YOO, Sunmi**
  **Seoul 06772 (KR)**
• **HONG, Myungoh**
  **Seoul 06772 (KR)**

(74) Representative: **Maikowski & Ninnemann
Patentanwälte Partnerschaft mbB
Postfach 15 09 20
10671 Berlin (DE)**

(54) **IMAGE ENCODING/DECODING METHOD BASED ON INTRA PREDICTION, METHOD FOR
TRANSMITTING BITSTREAM, AND RECORDING MEDIUM STORING BITSTREAM**

(57)     An image encoding/decoding method and apparatus are provided. The image decoding method according to the present disclosure comprises the steps of: determining an intra prediction mode of the current block; and generating a prediction block of the current block by performing intra prediction on the basis of the determined intra prediction mode, wherein the intra prediction may be restricted to be performed by using only reference samples within a predetermined range from among available reference samples of the current block.

FIG. 19

**Description**

[Technical Field]

The present disclosure relates to an image encoding/decoding method based on intra prediction, a method for transmitting a bitstream, and a recording medium storing a bitstream, and more specifically, relates to intra prediction mode-based image coding through reference sample restriction.

[Background Art]

Recently, the demand for high-resolution and high-quality images, such as High Definition (HD) images and Ultra High Definition (UHD) images, has been increasing in various fields. As image data becomes high-resolution and high-quality, the amount of transmitted information or bit rate increases relative to conventional image data. The increase in transmitted information or bit rate amount leads to an increase in transmission costs and storage costs.

Accordingly, a high-efficiency image compression technology is required to effectively transmit, store, and reproduce the information of high-resolution and high-quality images.

[Disclosure]

[Technical Problem]

The present disclosure is to provide an image encoding/decoding method and apparatus with improved encoding/decoding efficiency.

In addition, the present disclosure is to provide an image encoding/decoding method and apparatus based on intra prediction and reference sample restriction.

In addition, the present disclosure is to provide an image encoding/decoding method and apparatus that enhanced compression model (ECM) intra prediction efficiency is improved.

The present disclosure is to provide a non-transitory computer-readable recording medium for storing a bitstream generated by the image encoding method or apparatus according to the present disclosure.

The present disclosure is to provide a non-transitory computer-readable recording medium for storing a bitstream which is received and decoded by the image decoding apparatus according to the present disclosure and used for image reconstruction.

The present disclosure is to provide a method for transmitting a bitstream which is generated by the image encoding method or apparatus according to the present disclosure.

The technical problems to be achieved in the present disclosure are not limited to the technical problems described above, and other technical problems not described may be clearly understood by those of ordinary skill in the art from the following descriptions.

[Technical Solution]

An image decoding method according to an aspect of the present disclosure includes determining an intra prediction mode of a current block and generating a prediction block of the current block by performing intra prediction based on the determined intra prediction mode, wherein the intra prediction may be restricted to be performed by using only a reference sample within a predetermined range among available reference samples of the current block.

An image encoding method according to an aspect of the present disclosure includes determining an intra prediction mode of a current block and encoding prediction mode information of the current block based on the determined intra prediction mode, wherein the intra prediction may be determined by using only a reference sample within a predetermined range among available reference samples of the current block.

According to another embodiment of the present disclosure, a computer-readable recording medium may store a bitstream generated by the image encoding method or the image encoding apparatus of the present disclosure.

According to another embodiment of the present disclosure, a transmission method may transmit a bitstream generated by the image encoding apparatus or the image encoding method of the present disclosure.

The features of the present disclosure briefly summarized above are merely exemplary embodiments described in detail below and are not intended to limit the range of the present disclosure.

[Advantageous Effects]

According to the present disclosure, an image encoding/decoding method and apparatus with improved encoding/decoding efficiency may be provided.

In addition, according to the present disclosure, an image encoding/decoding method and apparatus based on intra prediction and reference sample restriction may be provided.

In addition, according to the present disclosure, an image encoding/decoding method and apparatus that may generate an adaptive intra prediction block in a reference sample area in intra prediction may be provided.

In addition, according to the present disclosure, an image encoding/decoding method and apparatus that enhanced compression model (ECM) intra prediction efficiency is improved may be provided.

According to the present disclosure, a non-transitory computer-readable recording medium for storing a bitstream generated by the image encoding method or apparatus according to the present disclosure may be provided.

According to the present disclosure, a non-transitory computer-readable recording medium for storing a bitstream which is received and decoded by the image decoding apparatus according to the present disclosure and used for image reconstruction may be provided.

According to the present disclosure, a method of transmitting a bitstream generated by the image encoding method or apparatus according to the present disclosure may be provided.

The effects obtainable from the present disclosure are not limited to the effects described above, and other effects not described may be clearly understood by those of ordinary skill in the art from the following descriptions.

[Description of Drawings]

FIG. 1 shows a schematic diagram of a video coding system to which an embodiment according to the present disclosure may be applied.

FIG. 2 shows a schematic diagram of an image encoding apparatus to which an embodiment according to the present disclosure may be applied.

FIG. 3 shows a schematic diagram of an image decoding apparatus to which an embodiment according to the present disclosure may be applied.

FIG. 4 shows a flowchart of an example of an intra prediction mode signaling method in an encoding apparatus.

FIG. 5 shows a flowchart of an example of an intra prediction mode determination method in a decoding apparatus.

FIG. 6 shows a diagram of an example of neighboring blocks used for deriving an MPM list.

FIG. 7 is a diagram showing an example of an intra prediction method that may be applied to the present disclosure.

FIG. 8 is a diagram showing an example of a block for vertical planar prediction according to an embodiment of the present disclosure.

FIG. 9 is a diagram showing an example of a MPM mode-based neighboring block search position in a 8x8 block according to an embodiment of the present disclosure.

FIG. 10 is a diagram showing an image encoding method and/or an image decoding method according to an embodiment of the present disclosure.

FIG. 11 is a diagram showing an example of an intra prediction method that may be applied to the present disclosure.

FIG. 12 is a diagram showing an example of a block for horizontal planar prediction according to an embodiment of the present disclosure.

FIG. 13 is a diagram for describing an exemplary search position of a neighboring block for MPM when applying the embodiment of the present disclosure in a 8x8 block according to an embodiment of the present disclosure.

FIG. 14 is a diagram showing an image encoding method and/or an image decoding method according to an embodiment of the present disclosure.

FIG. 15 is a diagram for describing an example of a method for combining an intra prediction method for predicting mainly based on an above reference sample and an intra prediction method for predicting mainly based on a left reference sample according to an embodiment of the present disclosure.

FIG. 16 is a diagram for describing an example of an intra prediction block and its neighboring reference sample area according to an embodiment of the present disclosure.

FIG. 17 is a diagram showing an example of a neighboring block search position for MPM when applying a proposed method in a 8x8 block according to an embodiment of the present disclosure.

FIG. 18 is a diagram showing an image encoding method and/or an image decoding method according to an embodiment of the present disclosure.

FIG. 19 is a diagram for describing an image decoding method that may be performed by an image decoding apparatus according to an embodiment of the present disclosure.

FIG. 20 is a diagram for describing an image encoding method that may be performed by an image encoding apparatus according to an embodiment of the present disclosure.

FIG. 21 shows an exemplary diagram of a content streaming system to which an embodiment of the present disclosure may be applied.

[Mode for Invention]

Hereinafter, embodiments of the present disclosure will be described in detail by referring to the attached drawings for those of ordinary skill in the art to easily implement them. However, the present disclosure may be implemented in various different forms and is not limited to the embodiments described herein.

In describing embodiments of the present disclosure, detailed explanations of well-known configurations or functions are omitted when they are deemed to obscure the main point of the present disclosure. Additionally, parts irrelevant to the description of the present disclosure are omitted from the drawings, and similar drawing symbol have been assigned to similar parts.

In the present disclosure, when a certain component is described as being "connected," "coupled," or "linked" to another component, this may include not only a direct connection but also an indirect connection where another component may exist in the middle. Additionally, when a certain component is described as "including" or "having" another component, this means that, unless explicitly stated otherwise, it does not exclude other components but may further include additional components.

In the present disclosure, the terms first, second, etc. are used solely for the purpose of distinguishing one component from another and do not limit the order or importance of the components unless explicitly stated otherwise. Accordingly, a first component in one embodiment may be referred to as a second component in another embodiment, and similarly, a second component in one embodiment may be referred to as a first component in another embodiment within the range of the present disclosure.

In the present disclosure, distinguishable components are described to clearly explain their respective characteristics and do not necessarily mean that the components are separate. In other words, a plurality of components may be integrated into a single hardware or software unit, or a single component may be distributed across multiple hardware or software units. Accordingly, without explicitly describing them, such integrated or distributed embodiments are also included in the range of the present disclosure.

In the present disclosure, the components described in various embodiments do not necessarily mean essential components, and some may be optional components. Accordingly, embodiments composed of a subset of the components described in one embodiment are also included in the range of the present disclosure. Additionally, embodiments that include additional components beyond those described in various embodiments are also included in the range of the present disclosure.

The present disclosure relates to the encoding and decoding of images, and the terms used herein may have the ordinary meanings commonly used in the field of technology to which this disclosure belongs unless the terms are newly defined in the present disclosure.

In the present disclosure, "picture" generally refers to a unit representing a single image at a specific point in time. A slice/tile is an encoding unit that constitutes a part of a picture, and a picture may be composed of one or more slices/tiles. Additionally, a slice/tile may include one or more coding tree units (CTUs).

In the present disclosure, "pixel" or "pel" may refer to the smallest unit that constitutes one picture (or image). Additionally, the term "sample" may be used as a corresponding term for a pixel. A sample may generally represent a pixel or the value of a pixel and may indicate only the pixel/pixel value of a luma component or only the pixel/pixel value of a chroma component.

In the present disclosure, "unit" may refer to a basic unit of image processing. A unit may include at least one of a specific area of a picture or information related to the area. Depending on the context, the term "unit" may be used interchangeably with "sample array," "block," "area," etc. In general, an $M \times N$ block may include a set (or array) of samples (or a sample array) or a set (or array) of transform coefficients, consisting of M columns and N rows.

In the present disclosure, the term "current block" may refer to one of "current coding block", "current coding unit", "encoding target block", "decoding target block", or "processing target block". When prediction is performed, "current block" may refer to "current prediction block" or "prediction target block". When transform (inverse transform)/quantization (dequantization) is performed, "current block" may refer to "current transform block" or "transform target block". When filtering is performed, "current block" may refer to "filtering target block".

In the present disclosure, unless explicitly stated as a chroma block, the term "current block" may refer to a block that includes both a luma component block and a chroma component block or may refer to "the luma block of the current block". The luma component block of the current block may be explicitly expressed with terms such as "luma block" or "current luma block", clearly indicating it as a luma component block. Additionally, the chroma component block of the current block may be explicitly expressed with terms such as "chroma block" or "current chroma block", clearly indicating it as a chroma component block.

In the present disclosure, "/" and "," may refer to "and/or". For example, "A/B" and "A, B" may refer to "A and/or B". Additionally, "A/B/C" and "A, B, C" may refer to "at least one of A, B, and/or C".

In the present disclosure, "or" may refer to "and/or". For example, "A or B" may mean 1) "A" only, 2) "B" only, or 3) "A and B." Alternatively, in the present disclosure, "or" may also mean "additionally or alternatively".

## Overview of the video coding system

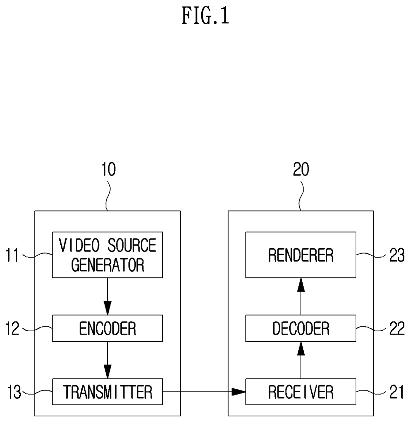

FIG. 1 shows a schematic diagram of a video coding system to which an embodiment according to the present disclosure may be applied.

A video coding system according to an embodiment may include an encoder apparatus 10 and a decoder apparatus 20. The encoder apparatus 10 may transmit encoded video and/or image information or data to the decoder apparatus 20 through a digital storage medium or network in the form of a file or streaming.

An encoder apparatus 10 according to an embodiment may include a video source generator 11, an encoder 12, and a transmitter 13. A decoder apparatus 20 according to an embodiment may include a receiver 21, a decoder 22, and a renderer 23. The encoder 12 may be referred to as a video/image encoder, and the decoder 22 may be referred to as a video/image decoder. The transmitter 13 may be included in the encoder 12. The receiver 21 may be included in the decoder 22. The renderer 23 may include a display, and the display may be configured as a separate device or external component.

The video source generator 11 may obtain a video/an image through a process of capturing, synthesizing, or generating a video/an image. The video source generator 11 may include a video/an image capture device and/or a video/an image generation device. The video/image capture device may include, for example, one or more cameras, a video/an image archive containing previously captured video/image, etc. The video/image generation device includes, for example, a computer, tablet, or smartphone, and may (electronically) generate a video/an image. For example, virtual video/image may be generated through a computer, etc., and in this case, the video/image capturing process may be replaced by the process of generating related data.

The encoder 12 may encode the input video/image. The encoder 12 may perform a series of procedures such as prediction, transform, quantization, etc. for compression and encoding efficiency. The encoder 12 may output the encoded data (encoded video/image information) in the form of a bitstream.

The transmitter 13 may obtain the encoded video/image information or data output in the form of a bitstream and transmit it to the receiver 21 of the decoder apparatus 20 or another external object through a digital storage medium or network, in the form of a file or streaming. The digital storage medium may include various storage media such as USB, SD, CD, DVD, Blu-ray, HDD, SSD, etc. The transmitter 13 may include an element for generating media files through a predetermined file format and element for transmission over broadcast/communication networks. The transmitter 13 may be provided as a separate transmission apparatus from the encoder 12, in which case the transmission apparatus may include at least one processor for obtaining the encoded video/image information or data in bitstream form and a transmitter for delivering it in the form of file or streaming. The receiver 21 may extract/receive the bitstream from the storage medium or network and transmit it to decoder 22.

The decoder 22 may decode the video/image by performing a series of procedures such as dequantization, inverse transform, prediction, etc. corresponding to the operations of the encoder 12.

The renderer 23 may render the decoded video/image. The rendered video/image may be displayed through the display unit.

## Overview of the image encoding apparatus

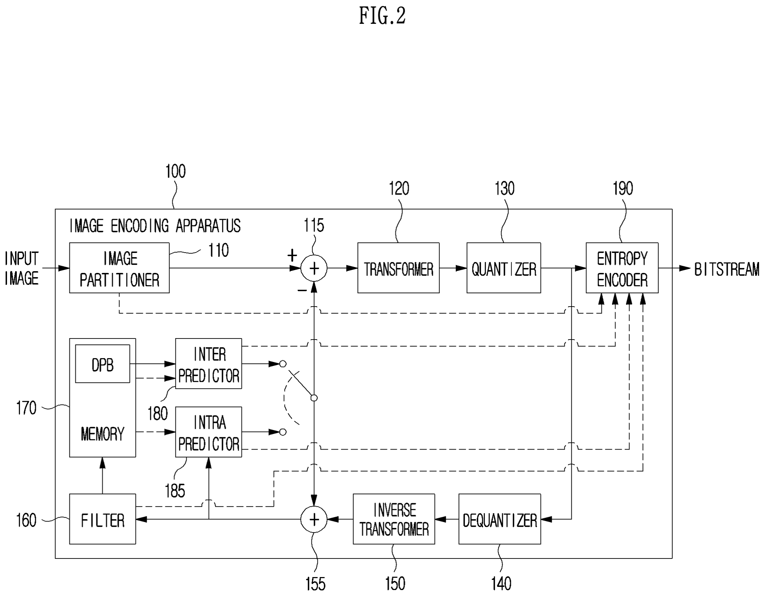

FIG. 2 shows a schematic diagram of an image encoding apparatus to which an embodiment according to the present disclosure may be applied.

As described in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter predictor 180, an intra predictor 185, and an entropy encoder 190. The inter predictor 180 and the intra predictor 185 may collectively be referred to as a "predictor." The transformer 120, the quantizer 130, the dequantizer 140, and the inverse transformer 150 may be included in a residual processor. The residual processor may further include the subtractor 115.

All or at least some of the multiple components constituting the image encoding apparatus 100 may be implemented as a single hardware component (i.e., an encoder or a processor), depending on the embodiment. Additionally, the memory 170 may include a decoded picture buffer (DPB) and may be implemented by a digital storage medium.

The image partitioner 110 may partition the input image (or picture, frame) input to the image encoding apparatus 100 into at least one processing unit. As an example, the processing unit may be referred to as a coding unit (CU). A coding unit may be obtained by recursively partitioning a coding tree unit (CTU) or a largest coding unit (LCU) according to a quad-tree, binary-tree, or ternary-tree (QT/BT/TT) structure. For example, a coding unit may be divided into a deeper-depth coding unit based on a quad-tree structure, a binary-tree structure, and/or a ternary-tree structure. For partitioning a coding unit, the quad-tree structure may be applied first, followed by the binary-tree structure and/or the ternary-tree structure. The coding procedure according to the present disclosure may be performed based on the final coding unit, which is not further partitioned. The largest coding unit may be used directly as the final coding unit, or a deeper-depth coding unit obtained by partitioning the largest coding unit may be used as the final coding unit. Here, the coding procedure may include a procedure such as prediction, transform, and/or reconstruction, which will be described later. As another example, the processing unit for the coding procedure may be a prediction unit (PU) or a transform unit (TU). The prediction unit and the transform unit may each be divided or partitioned from the final coding unit. The prediction unit may be a unit for sample prediction, and the transform unit may be a unit for deriving a transform coefficient and/or deriving a residual signal from a transform coefficient.

The predictor (inter predictor 180 or intra predictor 185) may perform prediction for a target block (current block) and generate a predicted block that includes prediction samples for the current block. The predictor may determine whether intra prediction or inter prediction is applied to the current block or coding unit (CU). The predictor may generate various information related to the prediction of the current block and transmit it to the entropy encoder 190. The prediction-related information may be encoded by the entropy encoder 190 and may be output in the form of a bitstream.

The intra predictor 185 may predict the current block by referring to samples within the current picture. The referenced samples may be located in the neighboring area of the current block or may be located farther away, depending on the intra prediction mode and/or intra prediction method. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes, depending on the granularity of the prediction direction. However, this is an example, and a greater or fewer number of directional prediction modes may be used depending on the configuration. The intra predictor 185 may also determine the prediction mode applied to the current block by using the prediction mode applied to neighboring block.

The inter predictor 180 may derive a predicted block for the current block based on a reference block (reference sample array) specified by a motion vector on a reference picture. To reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e. L0 prediction, L1 prediction, Bi prediction, etc.). In inter prediction, neighboring block may include spatial neighboring block present within the current picture and temporal neighboring block present in the reference picture. The reference picture containing the reference block and the reference picture containing the temporal neighboring block may be the same or different. The temporal neighboring block may be referred to as a collocated reference block or a collocated coding unit (colCU). The reference picture containing the temporal neighboring block may be referred to as a collocated picture (colPic). For example, the inter predictor 180 may construct a motion information candidate list based on neighboring blocks and generate information indicating which candidate is used to derive the motion vector and/or reference picture index of the current block. Inter prediction may be performed based on various prediction modes, and for example, in the skip mode and merge mode, the inter predictor 180 may use the motion information of neighboring block as the motion information of the current block. In skip mode, unlike merge mode, residual signal may not be transmitted. In the motion vector prediction (MVP) mode, the motion vector of a neighboring block may be used as a motion vector predictor, and the motion vector of the current block may be signaled by encoding the motion vector difference and an indicator for the motion vector predictor. The motion vector difference may refer to the difference between the motion vector of the current block and the motion vector predictor.

The predictor may generate a prediction signal based on various prediction methods and/or prediction techniques described later. For example, the predictor may apply intra prediction or inter prediction for the prediction of the current block, and it may also apply both intra prediction and inter prediction simultaneously. The prediction method that applies intra prediction and inter prediction simultaneously for the prediction of the current block may be referred to as combined inter and intra prediction (CIIP). Additionally, the predictor may perform intra block copy (IBC) for the prediction of the current block. Intra block copy may be used, for example, for screen content coding (SCC), etc. in applications such as game content image/video coding. IBC is a method of predicting the current block by using a pre-reconstructed reference block within the current picture, located at a predetermined distance from the current block. When IBC is applied, the position of the reference block within the current picture may be encoded as a vector (block vector) corresponding to the predetermined distance. IBC basically performs prediction within the current picture, but since it derives a reference block within the current picture, it may operate similarly to inter prediction. In other words, IBC may use at least one of the inter prediction methods described in the present disclosure.

The prediction signal generated by the predictor may be used to generate a reconstructed signal or to generate a residual signal. The subtractor 115 may generate a residual signal (residual block, residual sample array) by subtracting the prediction signal (predicted block, predicted sample array) output from the predictor from the input image signal (original block, original sample array). The generated residual signal may be transmitted to the transformer 120.

The transformer 120 may generate transform coefficients by applying a transform method to the residual signal. For example, the transform method may include at least one of Discrete Cosine Transform (DCT), Discrete Sine Transform (DST), Karhunen-Loeve Transform (KLT), Graph-Based Transform (GBT), or Conditionally Non-linear Transform (CNT). Here, GBT refers to a transform obtained from a graph when the relationship information between pixels is represented as a graph. CNT refers to a transform obtained based on a prediction signal generated by using all previously reconstructed pixels. The transform process may be applied to a pixel block of the same square size or to a non-square variable-sized block.

The quantizer 130 may quantize the transform coefficients and transmit them to the entropy encoder 190. The entropy encoder 190 may encode the quantized signal (information on the quantized transform coefficients) and output it as a bitstream. The information on the quantized transform coefficients may be referred to as residual information. The quantizer 130 may rearrange the block-shaped quantized transform coefficients into a one-dimensional vector based on a coefficient scan order and may generate the information on the quantized transform coefficients based on the one-dimensional vector of quantized transform coefficients.

The entropy encoder 190 may perform various encoding methods, such as exponential Golomb, context-adaptive variable length coding (CAVLC), or context-adaptive binary arithmetic coding (CABAC). The entropy encoder 190 may encode not only the quantized transform coefficients but also information necessary for video/image reconstruction (i.e., values of syntax elements) either together or separately with the quantized transform coefficients. The encoded information (i.e., encoded video/image information) may be transmitted or stored in the form of a bitstream in network abstraction layer (NAL) unit. The video/image information may further include information on various parameter sets, such as an adaptation parameter set (APS), a picture parameter set (PPS), a sequence parameter set (SPS), or a video parameter set (VPS). Additionally, the video/image information may further include general constraint information. The signaling information, transmitted information, and/or syntax elements described in the present disclosure may be included in the bitstream by being encoded through the above-described encoding process.

The bitstream may be transmitted through a network or stored in a digital storage medium. Here, the network may include a broadcast network and/or a communication network, etc., and the digital storage medium may include various storage media such as USB, SD, CD, DVD, Blu-ray, HDD, SSD, etc.

A transmitter (not shown) for transmitting the signal output from the entropy encoder 190 and/or a storage unit (not shown) for storing the signal may be provided as an internal/external element of the image encoding apparatus 100, or the transmitter may be configured as a component of the entropy encoder 190.

The quantized transform coefficients output from the quantizer 130 may be used to generate a residual signal. For example, a residual signal (residual block or residual samples) may be reconstructed by applying dequantization and inverse transform to the quantized transform coefficients through the dequantizer 140 and the inverse transformer 150.

The adder 155 may generate a reconstructed signal (reconstructed picture, reconstructed block, or reconstructed sample array) by adding the reconstructed residual signal to the prediction signal output from the inter predictor 180 or the intra predictor 185. When there is no residual for the target block, such as when the skip mode is applied, the predicted block may be used as the reconstructed block. The adder 155 may be referred to as a reconstructor or a reconstructed block generator. The generated reconstructed signal may be used for intra prediction of the next target block within the current picture and, as described later, may also be used for inter prediction of the next picture after undergoing filtering.

The filter 160 may apply filtering to the reconstructed signal to enhance subjective/objective quality. For example, the filter 160 may apply various filtering methods to the reconstructed picture to generate a modified reconstructed picture, and the modified reconstructed picture may be stored in the memory 170, specifically in the DPB of the memory 170. The various filtering methods may include, for example, deblocking filtering, sample adaptive offset, adaptive loop filter, bilateral filter, etc. The filter 160 may generate various filtering-related information, as described later in the explanations of each filtering method, and may transmit it to the entropy encoder 190. The filtering-related information may be encoded by the entropy encoder 190 and output in the form of a bitstream.

The modified reconstructed picture transmitted to the memory 170 may be used as a reference picture in the inter predictor 180. When inter prediction is applied in this case, the image encoding apparatus 100 may avoid prediction mismatches between the image encoding apparatus 100 and the image decoding apparatus, and may improve encoding efficiency.

The DPB in the memory 170 may store the modified reconstructed picture for use as a reference picture in the inter predictor 180. The memory 170 may store the motion information of a block in the current picture where motion information has been derived (or encoded) and/or the motion information of blocks in already reconstructed pictures. The stored motion information may be transmitted to the inter predictor 180 for use as motion information of spatial neighboring block or temporal neighboring block. The memory 170 may store the reconstructed samples of reconstructed blocks in the current picture and transmit them to the intra predictor 185.

**Overview of the image decoding apparatus**

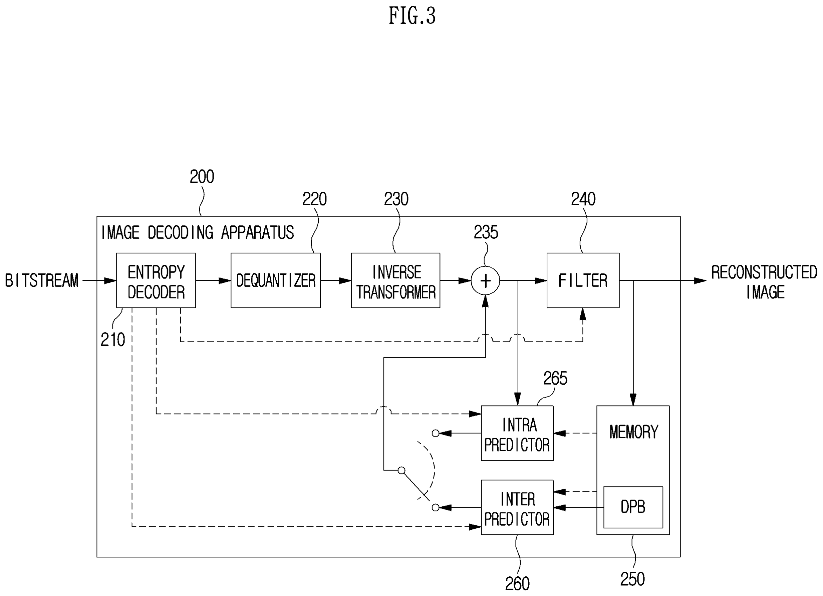

FIG. 3 shows a schematic diagram of an image decoding apparatus to which an embodiment according to the present disclosure may be applied.

As shown in FIG. 3, the image decoding apparatus 200 may include an entropy decoder 210, a dequantizer 220, an inverse transformer 230, an adder 235, a filter 240, a memory 250, an inter predictor 260, and an intra predictor 265. The inter predictor 260 and the intra predictor 265 may collectively be referred to as a "predictor". The dequantizer 220 and the inverse transformer 230 may be included in a residual processor.

All or at least some of the multiple components constituting the image decoding apparatus 200 may be implemented as a single hardware component (i.e., a decoder or a processor), depending on the embodiment. Additionally, the memory 170 may include a DPB and may be implemented by a digital storage medium.

The image decoding apparatus 200, which receives a bitstream containing video/image information, may perform a process corresponding to the process performed by the image encoding apparatus 100 in FIG. 2 to reconstruct the image. For example, the image decoding apparatus 200 may perform decoding using the processing unit applied in the image encoding apparatus. Therefore, the processing unit for decoding may be, for example, a coding unit. The coding unit may be a coding tree unit or may be obtained by splitting a largest coding unit. Additionally, the reconstructed image signal decoded and output through the image decoding apparatus 200 may be played back through a playback device (not shown).

The image decoding apparatus 200 may receive a signal output from the image encoding apparatus in FIG. 2 in the form of a bitstream. The received signal may be decoded through the entropy decoder 210. For example, the entropy decoder 210 may parse the bitstream to extract the information necessary for image reconstruction (or picture reconstruction) (i.e., video/image information). The video/image information may further include information on various parameter sets, such as an adaptation parameter set (APS), a picture parameter set (PPS), a sequence parameter set (SPS), or a video parameter set (VPS). Additionally, the video/image information may further include general constraint information. The image decoding apparatus may additionally use information on the parameter set and/or the general constraint information to decode the image. The signaling information, received information, and/or syntax elements described in the present disclosure may be obtained from the bitstream by being decoded through the decoding process. For example, the entropy decoder 210 may decode the information in the bitstream based on coding methods such as exponential Golomb encoding, CAVLC, or CABAC, and may output a syntax element value necessary for image reconstruction and quantized values of a transform coefficient related to a residual. More specifically, the CABAC entropy decoding method may receive a bin corresponding to a syntax element in the bitstream, may determine a context model using the information of the decoding target syntax element, the decoding information of neighboring block and the decoding target block, or information of previously decoded symbol/bin, may predict the probability of bin occurrence according to the determined context model, and may perform arithmetic decoding of the bin to generate a symbol corresponding to each syntax element. In this case, the CABAC entropy decoding method may update the context model for the next symbol/bin context model using the decoded symbol/bin information after determining the context model. Among the decoded information from the entropy decoder 210, the prediction-related information may be provided to the predictor (inter predictor 260 and intra predictor 265), and the residual value which is entropy decoded by the entropy decoder 210, in other words, the quantized transform coefficients and related parameter information, may be input to the dequantizer 220. Additionally, among the decoded information from the entropy decoder 210, filtering-related information may be provided to the filter 240. Meanwhile, a receiver (not shown) that receives the signal output from the image encoding apparatus may be additionally configured as an internal/external element of the image decoding apparatus 200, or the receiver may be configured as a component of the entropy decoder 210.

Meanwhile, the image decoding apparatus according to the present disclosure may also be referred to as a video/image/picture decoding apparatus. The image decoding apparatus may include an information decoder (video/image/picture information decoder) and/or a sample decoder (video/image/picture sample decoder). The information decoder may include the entropy decoder 210, and the sample decoder may include at least one of the dequantizer 220, the inverse transformer 230, the adder 235, the filter 240, the memory 250, the inter predictor 260, or the intra predictor 265.

The dequantizer 220 may dequantize the quantized transform coefficients and output the transform coefficients. The dequantizer 220 may rearrange the quantized transform coefficients into a two-dimensional block. In this case, the rearrangement may be performed based on the coefficient scan order applied in the image encoding apparatus. The dequantizer 220 may perform dequantization on the quantized transform coefficients using quantization parameter (i.e., quantization step size information) and may obtain transform coefficients.

The inverse transformer 230 may perform an inverse transform on the transform coefficients to obtain a residual signal (residual block, or residual sample array).

The predictor may perform prediction for the current block and generate a predicted block that includes prediction samples for the current block. The predictor may determine whether intra prediction or inter prediction is applied to the current block based on the prediction-related information output from the entropy decoder 210 and may determine a specific intra/inter prediction mode (prediction method).

That the predictor may generate a prediction signal based on various prediction methods (techniques) which will be described later is the same as described in the explanation of the predictor in the image encoding apparatus 100.

The intra predictor 265 may predict the current block by referring to samples within the current picture. The explanation of the intra predictor 185 may also be applied in the same way to the intra predictor 265.

The inter predictor 260 may derive a predicted block for the current block based on a reference block (reference sample array) specified by a motion vector on a reference picture. In this case, to reduce the amount of motion information transmitted in the inter prediction mode, motion information may be predicted at the block, sub-block, or sample level based on the correlation of motion information between the neighboring block and the current block. The motion information may include a motion vector and a reference picture index. The motion information may further include information on the inter prediction direction (i.e., L0 prediction, L1 prediction, Bi prediction, etc.). In inter prediction, a neighboring block may include spatial neighboring block within the current picture and temporal neighboring block in the reference picture. For example, the inter predictor 260 may construct a motion information candidate list based on neighboring blocks and derive the motion vector and/or reference picture index of the current block based on the received candidate selection information. Inter prediction may be performed based on various prediction modes (methods), and the prediction-related information may include information indicating the inter prediction mode (method) applied to the current block.

The adder 235 may generate a reconstructed signal (reconstructed picture, reconstructed block, reconstructed sample array) by adding the obtained residual signal to the prediction signal (predicted block, predicted sample array) output from the predictor (including the inter predictor 260 and/or the intra predictor 265). When there is no residual for the target block, such as when the skip mode is applied, the predicted block may be used as the reconstructed block. The explanation of the adder 155 may also be applied in the same way to the adder 235. The adder 235 may be referred to as a reconstructor or a reconstructed block generator. The generated reconstructed signal may be used for intra prediction of the next target block within the current picture and as described later, may also be used for inter prediction of the next picture after undergoing filtering.

The filter 240 may apply filtering to the reconstructed signal to enhance subjective/objective quality. For example, the filter 240 may apply various filtering methods to the reconstructed picture to generate a modified reconstructed picture, and the modified reconstructed picture may be stored in the memory 250, specifically in the DPB of the memory 250. The various filtering methods may include, for example, deblocking filtering, sample adaptive offset, adaptive loop filter, bilateral filter, etc.

The (modified) reconstructed picture stored in the DPB of the memory 250 may be used as a reference picture in the inter predictor 260. The memory 250 may store the motion information of a block in the current picture where motion information has been derived (or decoded) and/or the motion information of blocks in already reconstructed picture. The stored motion information may be transmitted to the inter predictor 260 to be used as motion information of a spatial neighboring block or a temporal neighboring block. The memory 250 may store the reconstructed samples of reconstructed blocks in the current picture and transmit them to the intra predictor 265.

In this specification, the embodiments described for the filter 160, the inter predictor 180, and the intra predictor 185 of the image encoding apparatus 100 may be applied in the same or corresponding manner to the filter 240, the inter predictor 260, and the intra predictor 265 of the image decoding apparatus 200.

### Intra Prediction Mode/Type Determination

When intra prediction is applied, an intra prediction mode to be applied to a current block may be determined by using intra prediction mode of a neighboring block. For example, a decoding apparatus may select one of most probable mode (MPM) candidates within an MPM list, which is derived based on the intra prediction mode of a neighboring block (e.g., left and/or above neighboring block) of the current block and additional candidate modes, based on a received MPM index. Alternatively, one of remaining intra prediction modes, which are not included in the MPM candidates (and a planar mode), may be selected based on remaining intra prediction mode information. The MPM list may be configured to include or exclude the planar mode as a candidate. For example, when the MPM list includes the planar mode as a candidate, the MPM list may have six candidates, and when the MPM list excludes the planar mode as a candidate, the MPM list may have three candidates. When the MPM list excludes the planar mode as a candidate, a not planar flag (i.e., intra_luma_not_planar_flag) indicating whether the intra prediction mode of the current block is not the planar mode may be signaled. For example, an MPM flag may be signaled first, and the MPM index and the not planar flag may be signaled when the value of the MPM flag is 1. In addition, the MPM index may be signaled when the value of the not planar flag is 1. Here, the configuration in which the MPM list excludes the planar mode as a candidate does not mean that the planar mode is not considered as an MPM, but rather, since the planar mode is always considered as an MPM, the not planar flag is signaled first to determine whether the mode is the planar mode first.

For example, whether the intra prediction mode applied to the current block is among the MPM candidates (and the planar mode) or among the remaining mode may be indicated based on an MPM flag (e.g., intra_luma_mpm_flag). A value of 1 for the MPM flag may indicate that the intra prediction mode for the current block is within the MPM candidates (and the planar mode), and a value of 0 for the MPM flag may indicate that the intra prediction mode for the current block is not within the MPM candidates (and the planar mode). A value of 0 for the not planar flag (i.e., intra_luma_not_planar_flag) may indicate that the intra prediction mode for the current block is the planar mode, and a value of 1 for the not planar flag may indicate that the intra prediction mode for the current block is not the planar mode. The MPM index may be signaled in the form of a syntax element such as mpm_idx or intra_luma_mpm_idx, and the remaining intra prediction mode information may be signaled in the form of a syntax element such as rem_intra_luma_pred_mode or intra_luma_mpm_remainder. For example, the remaining intra prediction mode information may indicate one of the remaining intra prediction modes that are not included in the MPM candidates (and the planar mode), indexed in order of prediction mode numbers among all intra prediction modes. The intra prediction mode may be an intra prediction mode for a luma component (sample). Hereinafter, the intra prediction mode information may include at least one of the MPM flag (i.e., intra_luma_mpm_flag), the not planar flag (i.e., intra_luma_not_planar_flag), the MPM index (i.e., mpm_idx or intra_luma_mpm_idx), and the remaining intra prediction mode information (i.e., rem_intra_luma_pred_mode or intra_luma_mpm_remainder). In present disclosure, the MPM list may also be referred to by various terms such as MPM candidate list or candModeList. When MIP is applied to the current block, a separate MPM flag (i.e., intra_mip_mpm_flag), MPM index (i.e., intra_mip_mpm_idx), and remaining intra prediction mode information (i.e., intra_mip_mpm_remainder) for MIP may be signaled, and the not planar flag may not be signaled.

The intra prediction mode signaling procedure in the encoding apparatus and the intra prediction mode determination procedure in the decoding apparatus may be performed as an example below.

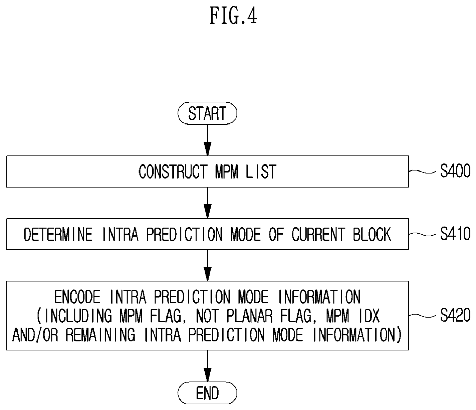

FIG. 4 shows a flowchart of an example of an intra prediction mode signaling method in an encoding apparatus.

Referring to FIG. 4, the encoding apparatus constructs an MPM list for a current block S400. The MPM list may include candidate intra prediction modes (MPM candidates) that have a high possibility of being applied to the current block. The MPM list may include intra prediction mode of a neighboring block, and may additionally include specific intra prediction modes according to a predetermined method. The specific method for configuring the MPM list will be described later.

The encoding apparatus determines an intra prediction mode of the current block S410. The encoding apparatus may perform prediction based on various intra prediction modes and may determine an optimal intra prediction mode based on rate-distortion optimization (RDO). In this case, the encoding apparatus may determine the optimal intra prediction mode by using only the MPM candidates included in the MPM list and the planar mode, or may determine the optimal intra prediction mode by additionally using the remaining intra prediction modes in addition to the MPM candidates included in the MPM list and the planar mode. Specifically, for example, when the intra prediction type of the current block is a specific type (i.e., LIP, MRL, or ISP) rather than a normal intra prediction type, the encoding apparatus may determine the optimal intra prediction mode by considering only the MPM candidates and the planar mode as the intra prediction mode candidates for the current block. In other words, in this case, the intra prediction mode for the current block may be determined only from among the MPM candidates and the planar mode, and the MPM flag may not be encoded/signaled in this case. The decoding apparatus, in this case, may estimate that the MPM flag is 1 without receiving the MPM flag separately.

Meanwhile, in general, when the intra prediction mode of the current block is not the planar mode and is one of the MPM candidates in the MPM list, the encoding apparatus generates an MPM index (mpm idx) indicating one of the MPM candidates. When the intra prediction mode of the current block is not included in the MPM list either, the encoding apparatus generates remaining intra prediction mode information that indicates a mode among the remaining intra prediction modes not included in the MPM list (and the planar mode), which is the same as the intra prediction mode of the current block.

The encoding apparatus may encode the intra prediction mode information and output it in the form of a bitstream. The intra prediction mode information may include the above-described MPM flag, not planar flag, MPM index, and/or remaining intra prediction mode information. In general, the MPM index and the remaining intra prediction mode information are in an alternative relationship and may not be signaled simultaneously for indicating the intra prediction mode of a block. In other words, the MPM flag value 1 may be signaled along with the not planar flag or the MPM index, and the MPM flag value 0 may be signaled along with the remaining intra prediction mode information. However, as described above, when a specific intra prediction type is applied to the current block, the MPM flag may not be signaled, and only the not planar flag and/or the MPM index may be signaled. In other words, in this case, the intra prediction mode information may include only the not planar flag and/or the MPM index.

The decoding apparatus may determine an intra prediction mode corresponding to the intra prediction mode information determined and signaled by the encoding apparatus.

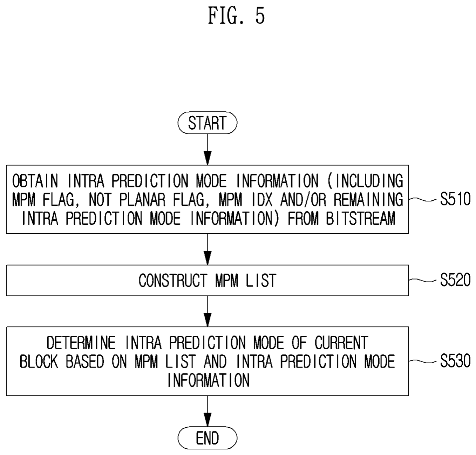

FIG. 5 shows a flowchart of an example of an intra prediction mode determination method in a decoding apparatus.

Referring to FIG. 5, the decoding apparatus obtains intra prediction mode information from a bitstream S500. The intra prediction mode information may include at least one of an MPM flag, a not planar flag, an MPM index, and remaining intra prediction mode, as described above.

The decoding apparatus constructs an MPM list S510. The MPM list is configured in the same manner as the MPM list configured by the encoding apparatus. In other words, the MPM list may include an intra prediction mode of a neighboring block and may further include specific intra prediction modes according to a predetermined method. The specific method for configuring the MPM list will be described later.

Although S510 is illustrated as being performed after S500, this is merely an example, and S510 may be performed before or simultaneously with S500.

The decoding apparatus determines an intra prediction mode of the current block based on the MPM list and the intra prediction mode information S520. As an example, when the value of the MPM flag is 1, the decoding apparatus may derive the planar mode as the intra prediction mode of the current block (based on the not planar flag), or may derive a candidate indicated by the MPM index among the MPM candidates in the MPM list as the intra prediction mode of the current block. In another example, when the value of the MPM flag is 0, the decoding apparatus may derive an intra prediction mode indicated by the remaining intra prediction mode information from among the remaining intra prediction modes not included in the MPM list and the planar mode as the intra prediction mode of the current block. Meanwhile, in another example, when the intra prediction type of the current block is a specific type (i.e., LIP, MRL, IST, etc.), the decoding apparatus may derive, without checking the MPM flag, the planar mode or a candidate indicated by the MPM index in the MPM list as the intra prediction mode of the current block.

For example, the not planar flag may be signaled when MRL is not applied to the current block (i.e., when intra_luma_ref_idx == 0), and the not planar flag may be omitted when MRL is applied to the current block (i.e., when intra_luma_ref_idx != 0). When the not planar flag is omitted, its value may be estimated as 1 by the decoding apparatus.

Meanwhile, intra prediction modes may include two directional intra prediction modes and 65 directional prediction modes. The non-directional intra prediction modes may include a planar intra prediction mode and a DC intra prediction mode, and the directional intra prediction modes may include intra prediction modes numbered from 2 to 66. The extended directional intra prediction mode may be applied to blocks of all sizes and may be applied to both luma and chroma components.

Meanwhile, in addition to the intra prediction modes described above, the intra prediction mode may further include a cross-component linear model (CCLM) mode for a chroma sample. The CCLM mode may be classified into LT_CCLM, L_CCLM, and T_CCLM depending on whether left samples, top samples, or both are considered for deriving a LM parameter, and it may be applied only to a chroma component.

The intra prediction modes, for example, may be indexed as shown in Table 1 below.

[Table 1]

| Intra prediction mode | Associated name |
|---|---|
| 0 | INTRA_PLANAR |
| 1 | INTRA_DC |
| 2..66 | INTRA_ANGULAR2..INTRA_ANGULAR66 |
| 81..83 | INTRA_LT_CCLM, INTRA_L_CCLM, INTRA_T_CCLM |

Meanwhile, the intra prediction type (or additional intra prediction mode, etc.) may include at least one of LIP, PDPC, MRL, ISP, and MIP, as described above. The intra prediction type may be indicated based on intra prediction type information, and the intra prediction type information may be implemented in various forms. As an example, the intra prediction type information may include intra prediction type index information indicating one of the intra prediction types. In another example, the intra prediction type information may include at least one of reference sample line information (i.e., intra_luma_ref_idx) indicating whether MRL is applied to the current block and, when applied, which reference sample line is used, an ISP flag (i.e., intra_subpartitions_mode_flag) indicating whether ISP is applied to the current block, ISP type information (i.e., intra_subpartitions_split_flag) indicating a split type of subpartitions when ISP is applied, a flag information indicating whether PDPC is applied, or a flag information indicating whether LIP is applied. In addition, the intra prediction type information may include an MIP flag (which may be referred to as intra_mip_flag) indicating whether MIP is applied to the current block.

Meanwhile, as described above, when MIP is applied to the current block (i.e., when the value of intra_mip_flag is 1), an MPM list for MIP may be separately configured, and the intra prediction mode information for MIP may include an MPM flag referred to as intra_mip_mpm_flag, an MPM index referred to as intra_mip_mpm_idx, and remaining intra prediction mode information referred to as intra_mip_mpm_remainder.

In addition, various prediction modes may be used for MIP, and a matrix and an offset for MIP may be derived based on the intra prediction mode for MIP. As described above, the matrix may be referred to as a (MIP) weight matrix, and the offset may be referred to as a (MIP) offset vector or a (MIP) bias vector. The number of intra prediction modes for MIP may be differently set based on the size of the current block. For example, i) when the height and width of the current block (i.e., CB or TB) are both 4, 35 intra prediction modes (i.e., intra prediction mode 0 to 34) may be available, ii) when both the height and width of the current block are equal to or less than 8, 19 intra prediction modes (i.e., intra prediction mode 0 to 18) may be available, iii) in other cases, 11 intra prediction modes (i.e., intra prediction mode 0 to 10) may be available. For example, when the height and width of the current block are both 4, it may be referred to as block size type 0, when both the height and width of the current block are equal to or less than 8, it may be referred to as block size type 1, and in other cases, it may be referred to as block size type 2, and the number of intra prediction modes for MIP may be organized in the following table. However, this is merely an example, and the block size type and the number of available intra prediction modes may be changed. In the present disclosure, the intra prediction mode for MIP may be referred to as an MIP intra prediction mode, an MIP prediction mode, or an MIP mode.

[Table 2]

| block size type (MipSizeId) | number of MIP intra prediction modes | MIP intra prediction mode |
|---|---|---|
| 0 | 35 | 0...34 |
| 1 | 19 | 0...18 |
| 2 | 11 | 0...10 |

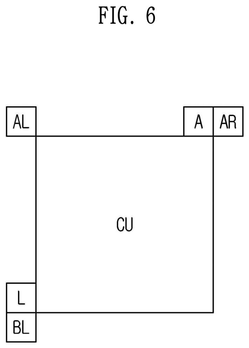

Meanwhile, in an enhanced compression model (ECM), a secondary MPM list has been introduced. The conventional primary MPM (PMPM) list includes six entries, and the secondary MPM (SMPM) list includes sixteen entries. First, a general MPM list having twenty-two entries is configured, and the first six entries in the general MPM list are included in the PMPM list, while the remaining entries are included in the SMPM list. The first entry in the general MPM list is a planar mode, and the remaining entries are composed of intra modes of neighboring blocks on the left (L), above (A), below-left (BL), above-right (AR), and above-left (AL), directional modes to which offsets are added from the first two available directional modes of the neighboring blocks, and a default mode, as described in FIG. 6.

When a CU block is in a vertical direction, the order of neighboring blocks may be above (A), left (L), below-left (BL), above-right (AR), and above-left (AL). Otherwise, the order may be left (L), above (A), below-left (BL), above-right (AR), and above-left (AL).

A PMPM flag is parsed, and when its value is 1, a PMPM index may be parsed to determine which entry in the PMPM list is selected. Otherwise, an SPMPM flag may be parsed to determine whether to parse an SPMPM index or remaining modes.

**Neighboring Reference Sample Derivation**

When intra prediction is applied to a current block, neighboring reference samples to be used for intra prediction of a current block may be derived. The neighboring reference samples of the current block may include a total of $2 \times nH$ samples adjacent to the left boundary and neighboring the bottom-left of a $nW \times nH$-sized current block, a total of $2 \times nW$ samples adjacent to the top boundary and neighboring the top-right of a current block and one sample neighboring the top-left of a current block. Alternatively, the neighboring reference samples of the current block may include top neighboring samples of a plurality of columns and left neighboring samples of a plurality of rows. In addition, the neighboring reference samples of the current block may include a total of nH samples adjacent to the right boundary of a nWxnH-sized current block, a total of nW samples adjacent to the bottom boundary of a current block, and one sample neighboring the bottom-right of a current block.

Meanwhile, when a MRL described below is applied, reference samples may be located on lines 1 to 3, not line 0 adjacent to a current block on the left/top, and in this case, the number of neighboring reference samples may increase further. The area and number of specific neighboring reference samples are described below.

Meanwhile, when ISP described below is applied, the neighboring reference samples may be derived in the unit of a sub-partition.

Some of the neighboring reference samples of a current block may not be decoded yet, or may not be available. In this case, a decoder may configure neighboring reference samples to be used for prediction through interpolation of available samples.

Some of the neighboring reference samples of a current block may not be decoded yet, or may not be available. In this case, a decoder may configure neighboring reference samples to be used for prediction through extrapolation of available samples. Until reaching a top-right reference sample starting from the bottom-left, they may be configured by substituting or padding a pixel that is not decoded yet or that is unavailable with the last available sample while updating a referenceable sample into the latest sample (the last available sample).

## Intra Prediction Mode/Type based Prediction Sample Derivation

A predictor of an encoding apparatus/decoding apparatus may derive a reference sample from an intra prediction mode of a current block among neighboring reference samples of a current block, and may generate a prediction sample of the current block based on the reference sample.

For example, (i) a prediction sample may be derived based on an average or interpolation of neighboring reference samples of a current block, and (ii) the prediction sample may be derived based on a reference sample located in a specific (prediction) direction among the neighboring reference samples of the current block. Case (i) may be referred to as a non-directional mode or a non-angular mode, and case (ii) may be referred to as a directional mode or an angular mode. In addition, the prediction sample may be generated by interpolation between a first neighboring sample and a second neighboring sample, the second neighboring sample being located in a direction opposite to the prediction direction of the intra prediction mode of the current block with respect to the prediction sample of the current block among the neighboring reference samples. The above-described case may be referred to as linear interpolation intra prediction (LIP). Additionally, a temporary prediction sample of the current block may be derived based on filtered neighboring reference samples, and a prediction sample of the current block may be derived by performing a weighted sum of the temporary prediction sample and at least one reference sample, derived by the intra prediction mode, among the conventional neighboring reference samples, in other words, unfiltered neighboring reference samples. The above-described case may be referred to as position dependent intra prediction (PDPC). In addition, among neighboring multiple reference sample line of the current block, a reference sample line with the highest prediction accuracy may be selected, and a prediction sample may be derived by using a reference sample located in the prediction direction on the selected line, and in this case, the intra prediction encoding may be performed by signaling the used reference sample line to the decoding apparatus. The above-described case may be referred to as multi-reference line intra prediction (MRL) or MRL-based intra prediction. Additionally, the current block may be divided into vertical or horizontal subpartitions, and intra prediction may be performed based on the same intra prediction mode, while neighboring reference samples may be derived and used in the subpartition unit. In this case, the intra prediction mode of a current block is applied in the same manner to the subpartitions, intra prediction performance may be improved by deriving and using a neighboring reference sample in the subpartition unit. This prediction method may be referred to as intra sub-partitions (IPS) or IPS-based intra prediction. Detailed description will be described later. In addition, when a prediction direction based on a prediction sample points the position between the neighboring reference samples, in other words, when the prediction direction points to a fractional sample position, a value of the prediction sample may be derived through interpolation of a plurality of reference samples located around the corresponding prediction direction (i.e., corresponding fractional sample position neighbor).

The above-described intra prediction methods may be referred to as intra prediction type, distinguished from intra prediction mode. The intra prediction type may also be referred to by various terms such as intra prediction technique or additional intra prediction mode. For example, the intra prediction type (or additional intra prediction mode, etc.) may include at least one of the above-described LIP, PDPC, MRL, or ISP. Information on the intra prediction type may be encoded by an encoding apparatus and included in a bitstream to be signaled to a decoding apparatus. The information on the intra prediction type may be implemented in various forms, such as flag information indicating whether each intra prediction type is applied, or index information indicating one of intra prediction type among multiple intra prediction types.

The MPM list for deriving the above-described intra prediction mode may be configured differently according to the intra prediction type. Alternatively, the MPM list may be commonly configured regardless of the intra prediction type.

## Neighboring Reference Sample Derivation

When intra prediction is applied to a current block, neighboring reference samples to be used for intra prediction of a current block may be derived. The neighboring reference samples of the current block may include a total of $2 \times nH$ samples adjacent to the left boundary and neighboring the bottom-left of a $nW \times nH$-sized current block, a total of $2 \times nW$ samples adjacent to the top boundary and neighboring the top-right of a current block and one sample neighboring the top-left of a current block. Alternatively, the neighboring reference samples of the current block may include top neighboring samples of a plurality of columns and left neighboring samples of a plurality of rows. In addition, the neighboring reference samples of the current block may include a total of nH samples adjacent to the right boundary of a nWxnH-sized current block, a total of nW samples adjacent to the bottom boundary of a current block, and one sample neighboring the bottom-right of a current block.

Meanwhile, when a multiple reference line (MRL) is applied, reference samples may be located on lines 1 to 3, not line 0 adjacent to a current block on the left/top, and in this case, the number of neighboring reference samples may increase further. The area and number of specific neighboring reference samples are described below.

Meanwhile, when intra sub-partitions (ISP) is applied, the neighboring reference samples may be derived in the unit of a sub-partition.

**DIMD (Decoder side intra mode derivation)**

In DIMD, intra prediction may be derived as a weighted average of a planar and two derived directions. To achieve this, two angular modes may be selected from a Histogram of Gradient (HoG) calculated from neighboring pixels of the current block. When the two modes are selected, their predictors (prediction blocks) and the planar predictor may be normally calculated, and the corresponding weighted average may be used as the final predictor (the final prediction block) for the current block. In this case, to determine the weight, the corresponding amplitude in the HoG may be used for each of the two modes.

Since the derived intra modes are included in the primary list of an intra MPM, the DIMD process may be performed before the MPM list is configured. The primary derived intra mode of a DIMD block may be stored together with the block and may be used for configuring MPM list of neighboring blocks.

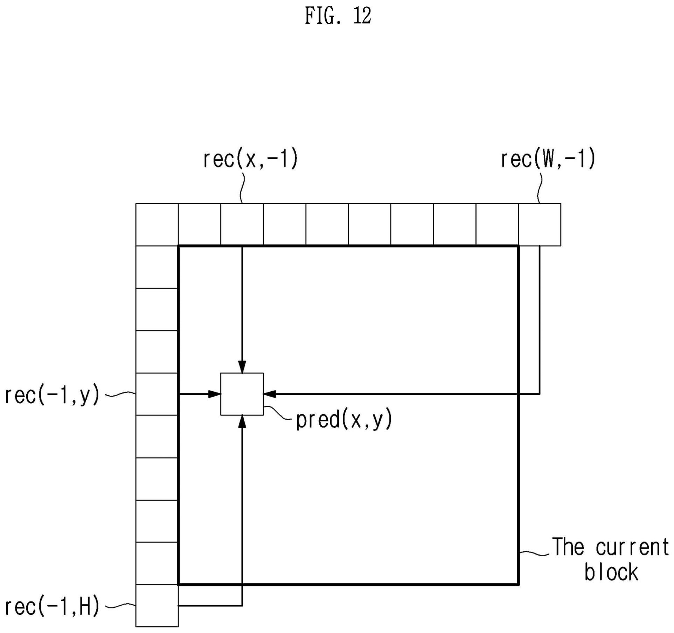

In the DIMD chroma mode, the DIMD derivation method may be used to derive a chroma intra prediction mode of the current block based on pre-reconstructed neighboring Y, Cb, and Cr samples in the second neighboring row and column as shown in FIG. 12. Specifically, in order to build the HoG, horizontal gradient and vertical gradient may be calculated not only for the pre-reconstructed Cb and Cr samples but also for each collocated pre-reconstructed luma sample of the current chroma block. Then, chroma intra prediction for the current chroma block may be performed using the intra prediction mode with the highest histogram amplitude.

When the intra prediction mode derived from the DIMD chroma mode is the same as the intra prediction mode derived from the DM mode, the intra prediction mode with the second-highest histogram amplitude may be used as the DIMD chroma mode. To indicate whether the above-described DIMD chroma mode is applied, a predetermined CU-level flag may be signaled.

**TIMD(Fusion for template-based intra mode derivation)**

For each intra prediction mode in the MPM, the SATD between the prediction sample of a template and the reconstructed sample may be calculated. Then, the first two intra prediction modes with the smallest SATD may be selected as TIMD modes. These two TIMD modes may be fused according to a weight, and such weighted intra prediction may be used for coding the current CU. The derivation of the TIMD mode may include the above-described Position Dependent Intra Prediction Combination (PDPC).

The cost of the two selected modes may be compared with a predetermined threshold, and a cost factor 2 may be applied as shown in Equation 1 below.

[Equation 1]

$$costMode2 < 2 * costMode1$$

When the condition of Equation 1 is true, the above-described fusion may be applied. In contrast, when the condition of Equation 1 is false, only mode 1 may be used.

Meanwhile, the weight of the modes may be calculated from their respective SATD costs as shown in Equation 2 below.

[Equation 2]

$$weight1 = costMode2/(costMode1 + costMode2)$$

$$weight2 = 1 - weight1$$

**Intra Prediction Fusion**

An intra prediction method derives prediction samples by the weight combination of multiple predictors (prediction blocks) generated from a different reference line. In this process, multiple intra predictors are generated and fused through weighted average. The process of deriving a predictor to be used in a fusion process is as follows.

An intra prediction method derives prediction samples by the weight combination of multiple predictors (prediction blocks) generated from a different reference line. In this process, multiple intra predictors are generated and fused through weighted average. The process of deriving a predictor to be used in a fusion process is as follows.

1. For a directional intra prediction mode including the single mode of TIMD and DIMD, a proposed method derives intra prediction with a weight obtained from multiple reference lines represented as $p_{fusion} = w_0 p_{line} + w_1 p_{line+1}$. Here, $p_{line}$ is intra prediction obtained from a default reference line, and $p_{line+1}$ is prediction obtained from a line above a default reference line. Weight $w_0$ is set as 3/4, and $w_1$ is set as 1/4.

2. For a TIMD mode performing blending, $p_{line}$ is used for the first mode (weight $w_0$ is 1, $w_1$ is 0), and $p_{line+1}$ is used for the second mode (weight $w_0$ is 0, $w_1$ is 1).

3. For a DIMD mode performing blending, the number of predictors (prediction blocks) used for weighted average is increased from 3 to 6.

An intra prediction fusion method is applied to a luma block when a directional intra prediction mode (an angular intra mode) has a non-integer gradient (reference sample interpolation is essential) and a block size is greater than 16, and is used with a MRL, but is not applied to an ISP-coded block. In addition, PDPC is applied to an intra prediction mode by using what is closest to a current block reference line.

The present disclosure relates to intra prediction, and more specifically, relates to a technology for adaptively selecting and applying an intra prediction mode to a reference sample area in directional and non-directional intra prediction. In addition, according to an embodiment of the present disclosure, a technology for efficiently combining a plurality of intra prediction blocks generated by using a different reference sample area to improve encoding efficiency may be proposed.

As an example, when the intra prediction mode of a current block is based on DIMD, a new intra prediction block may be generated by combining two prediction blocks in an intra prediction mode and a planar intra prediction block through the HoG distribution analysis of the reference sample of a current block.

As another example, when the intra prediction mode of a current block is based on TIMD, a new intra prediction block may be generated by combining two intra prediction blocks selected through template matching on the extended reference sample line of a current block.

As another example, when the intra prediction mode of a current block is based on intra prediction fusion, the selected reference sample line of a current block may be used to generate an intra prediction block, and a reference sample line immediately above a selected reference sample line may be used to generate a new prediction block by applying the same intra prediction mode, so a new prediction block may be generated by combining two prediction blocks.

Meanwhile, according to an embodiment of the present disclosure, a prediction block may be generated by selecting only an intra prediction mode that mainly utilizes the above reference sample of a current block. In addition, similarly, a prediction block may be generated by selecting only an intra prediction mode that mainly utilizes the left reference sample of a current block. In addition, prediction blocks generated in this way may be combined based on a weight to generate one (final) prediction block.

In other words, in an example of the present disclosure, when using an intra prediction mode that performs prediction mainly based on an above reference sample, only an intra prediction mode that is adaptively selected based on this may be selected to apply an intra prediction mode to a current block. As another example, when using an intra prediction mode that performs prediction mainly based on a left reference sample, only an intra prediction mode that is adaptively selected based on this may be selected to apply an intra prediction mode to a current block. In addition, intra prediction accuracy may be improved by adaptively combining a plurality of reference blocks generated in this way.

Hereinafter, the embodiment of the present disclosure will be described in detail by referring to drawings.

## Embodiment #1

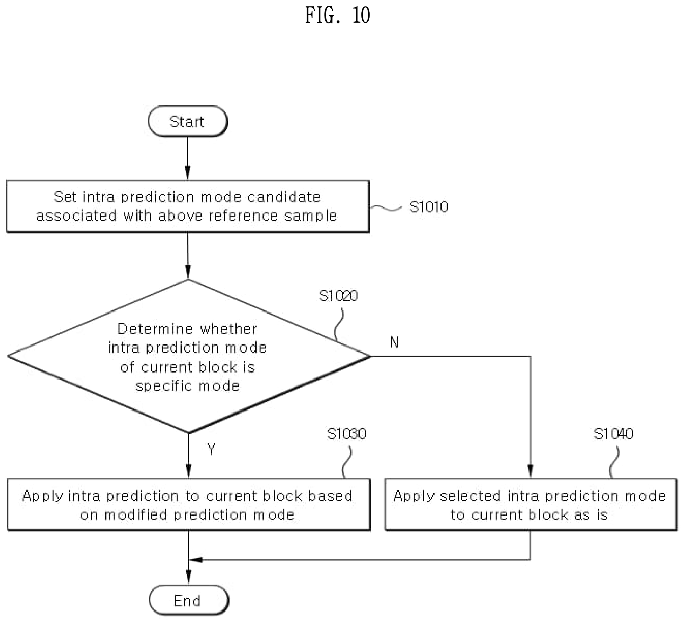

This embodiment proposes a method for generating an intra prediction block by using only an intra prediction mode that performs prediction mainly based on the above reference sample of a current block. It is described by referring to FIG. 10 showing an image encoding method and/or an image decoding method according to an embodiment of the present disclosure and other drawings.

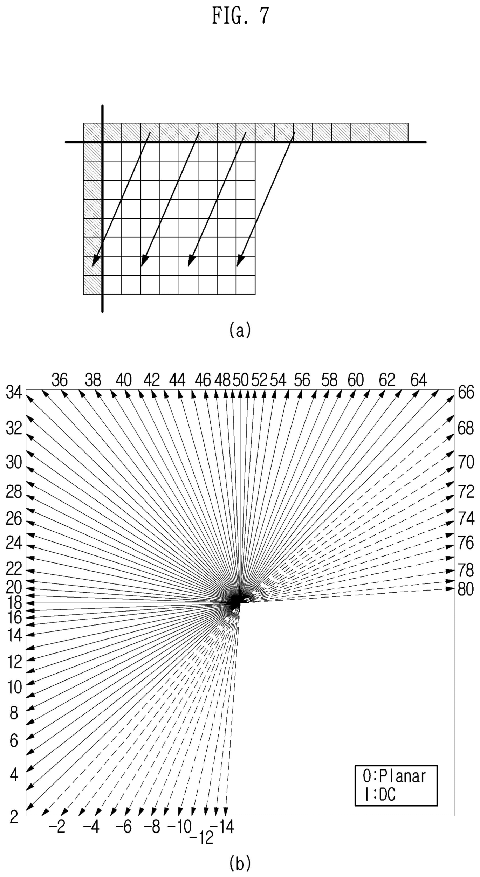

As an example, intra prediction, i.e. intra prediction, may be performed by using partially selected modes. The partially selected modes may mean modes selected based on the position (e.g., above) of a reference sample, e.g., modes restricted to a specific range. To this end, an intra prediction mode candidate associated with an above reference sample may be set first S1010. After S1010, although not shown in FIG. 10, a decoder may determine an intra prediction mode by obtaining information on an intra prediction mode from a bitstream. Meanwhile, an encoder may select and determine an intra prediction mode from intra prediction mode candidates and encode information on a selected intra prediction mode into a bitstream. Afterwards, whether the intra prediction mode of a current block is a specific mode (e.g., a planar mode or a DC mode) may be determined S1020. When the intra prediction mode of a selected current block is a planar mode or a DC mode, intra prediction may be applied to a current block based on a modified DC or planar (vertical planar) prediction mode S1030, and when the intra prediction mode of a selected current block is not a planar mode or a DC mode, a selected intra prediction mode may be applied to a current block as it is S1040. It is described in detail by referring to FIGS. 7 to 9.

FIG. 7 is a diagram showing an example of an intra prediction method that may be applied to the present disclosure. More specifically, FIG. 7 is an example of a method for performing intra prediction by using only an above reference sample, wherein the left, i.e., (A) is a drawing showing an example of intra prediction based on an intra prediction direction (e.g., no.59 for being VVC-based) in a 8x8 block and the right, (B) is a drawing showing the intra prediction direction and number of VVC.

FIG. 7(A) is an example of an intra prediction direction (e.g., intra prediction mode 59 for VVC, refer to FIG. 7(B)) that predicts a current block by using only an above reference sample. As shown in FIG. 7, in vertical intra prediction (e.g., 50 for VVC), other intra prediction modes (e.g., intra prediction mode 66 for VVC) may perform intra prediction by using only an above reference sample above a current block. Meanwhile, as another example, when applying the wide angle intra prediction of VVC, modes 50 to 80 may be a mode that uses only an above reference sample.

In this embodiment, intra prediction may be performed by combining only intra prediction modes that perform prediction mainly based on an above reference sample as in an example above. In this case, an encoder may transmit this corresponding intra prediction information to a decoder. In other words, according to this embodiment, a prediction block may be generated by perforing intra prediction by adaptively selecting only an intra prediction mode that performs prediction mainly based on an above reference sample.

According to an embodiment of the present disclosure, when performing prediction mainly based on the above reference sample of a current block, only an intra prediction mode within a specific range (e.g., p to q) may be used:

1. As an example, when vertical intra prediction (e.g., mode 50 for VVC) is applied, only an intra prediction mode greater than or equal to a specific mode (e.g., 50 for VVC) may be used. In other words, intra prediction may be performed by an intra prediction mode within a specific range (e.g., prediction modes 50 to 66 for VVC, and prediction modes 50 to 80 when applying the wide angle intra prediction mode of VVC).

2. As another example, when diagonal intra prediction is applied, only an intra prediction mode exceeding a specific mode (e.g., 34 for VVC) may be used. In other words, intra prediction may be performed by an intra prediction mode within a specific range (e.g., prediction modes 35 to 66 for VVC, and prediction modes 35 to 80 when applying the wide angle intra prediction mode of VVC).

3. As another example, when horizontal intra prediction is applied, only an intra prediction mode exceeding a specific mode (e.g., no.18 for VVC) may be used.

4. As another example, when vertical intra prediction is applied, only an intra prediction mode less than or equal to a specific mode (e.g., no.50 for VVC) may be used. In other words, for VVC, only an intra prediction mode within a specific range (e.g., 19 to 50) may be used.

In other words, as in an example above, intra prediction may not be performed by using only an intra prediction mode within a specific range (e.g., intra prediction modes p to q). As an example, p and q may have a value within a specific range. For example, p and q may have a value from 0 to 80, and p≤q should be satisfied.

Meanwhile, according to this embodiment, an wide angle intra prediction mode may be applied or may not be applied. In other words, intra prediction exceeding the number of a mode with the highest number among the general intra prediction modes (e.g., no.66 for VVC) may be considered, or only up to the intra prediction mode of a corresponding mode may be used.

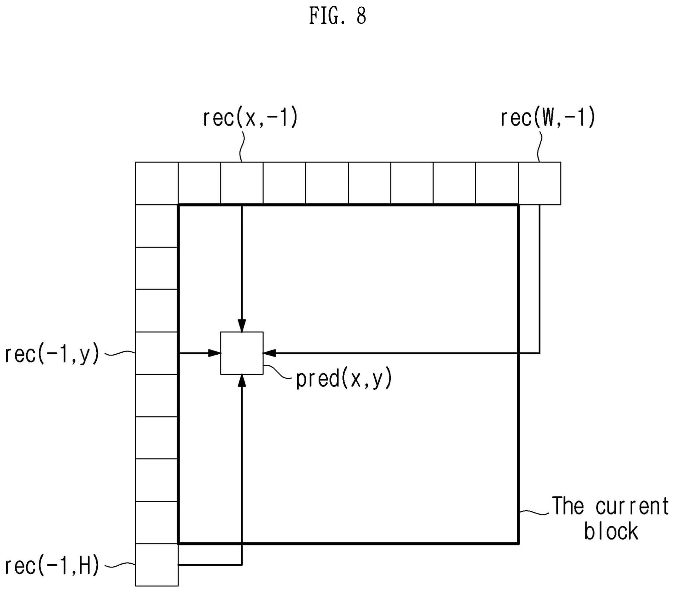

In addition, although only a directional intra prediction mode is used as an example above, it corresponds to an embodiment of the present disclosure, so according to other embodiments, a non-directional intra prediction mode such as PLANAR and DC may be used. Therefore, when applying a DC mode, according to the present disclosure, a DC value may be calculated by using only the above reference sample of a current block. In addition, when applying a planar mode, according to the present disclosure, a vertical planar mode may be applied by using the following Equation. FIG. 8 is a diagram showing an example of a block for vertical planar prediction according to an embodiment of the present disclosure.

$$pred_{ver}(x, y) = ((H - 1 - y) * rec(x, -1) + (y + 1) * rec(-1, H) + (H >> 1)) \gg log_2 H \qquad \text{[Equation 3]}$$

In Equation above, H may mean the height of a block, and (x, y) may mean a coordinate within a block. In addition, rec(x, y) may mean a reference sample at a (x, y) position, and $pred_{ver}(x,y)$ may mean a value predicted by vertical planar at a (x, y) position.

Meanwhile, when an intra prediction mode is restricted according to this embodiment and intra prediction mode information is signaled, the following exemplary method may be used:

An intra prediction mode that is selected adaptively based on X, the number of available intra prediction modes, may be encoded and decoded through appropriate binarization.

In the method, X may mean the number of available intra prediction modes according to the embodiment. For example, for being VVC-based, only intra prediction modes 50 to 66 are used, and when a vertical planar among the planars and a DC mode are included, X may be 19.

In this case, for the signaling of an intra prediction mode selected in this embodiment, an intra prediction mode may be encoded and signaled as intra prediction mode information through truncated binary coding based on X, the number of intra prediction mode candidates.

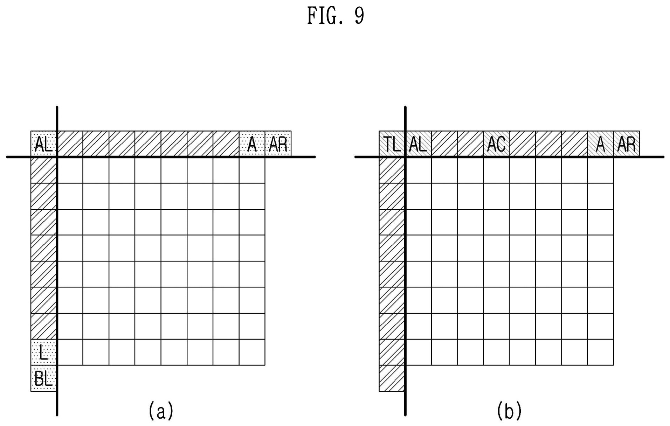

Alternatively, as in the existing video coding standard including HEVC/VVC, after selecting a MPM intra prediction mode candidate first through the intra prediction mode search of a neighboring block, the information of a selected intra prediction mode may be signaled adaptively based on MPM and non-MPM lists. The following example relates to an example in which an intra prediction mode is divided into MPM and non-MPM modes and is encoded and decoded. FIG. 9 is a diagram showing an example of a MPM mode-based neighboring block search position in a 8x8 block according to an embodiment of the present disclosure.

As an example, a specific number (hereinafter, β) of MPM intra prediction modes may be preferentially selected by using the intra prediction mode of a neighboring block to select β intra prediction mode candidates. In this case, according to this embodiment, when selecting a candidate prediction mode based on the intra prediction mode of a neighboring block, only an intra prediction mode included within an intra prediction mode range (e.g., prediction modes p to q) may be selected as a candidate prediction mode. As an example, β may be an arbitrary number within X (which may mean the number of intra prediction modes that may be used according to the embodiment).

Meanwhile, in this case, a MPM index may be binarized through truncated unary binarization and encoded and decoded. Meanwhile, as an example, when an intra prediction mode candidate is selected without being based on a MPM (non-MPM), a selected intra prediction mode candidate (e.g., a plurality of) may be encoded and decoded through truncated binary binarization. Meanwhile, a default mode for being based on a MPM may be determined in the order of the high selection frequency among an arbitrary number of selected intra prediction mode candidates such as planar (e.g., no.0 for VVC), a vertical mode (e.g., no.50 for VVC), DC (e.g., no.1 for VVC) and another specific mode (e.g., no.66 for VVC).

As an example, the selection order and number of intra prediction mode candidates using a neighboring block may follow a method for selecting in HEVC, VV, or ECM. (A), the left in FIG. 9, is a drawing for an example of a neighboring block search position for MPM selection in ECM according to an embodiment of the present disclosure. (B), the right in FIG. 9, is a drawing showing an example for setting a neighboring block search position according to an embodiment of the present disclosure. As an example, when selecting three MPMs according to this embodiment, an intra prediction candidate may be searched and selected in the order of blocks including A -> AR -> AL -> AC -> TL pixels in (B), the right of FIG. 9. In the above, AC may correspond to a reference sample having an x-coordinate that is a value obtained by dividing the width value of a current block by 2.

Meanwhile, a pixel position and search order for a MPM search described above are not limited to this example, and an intra prediction candidate may be selected in various ways according to the intra prediction mode of above and left reference samples. In addition, in order to select more intra prediction candidates, an intra prediction candidate may be selected by searching the above and left reference samples of a plurality of reference sample lines.

Alternatively, primary MPM and secondary MPM intra prediction mode candidates may be selected preferentially through the intra prediction mode search of a neighboring block such as ECM. Hereinafter, an example is described that an intra prediction mode is divided into primary MPM, secondary MPM and non-MPM modes and is encoded and decoded.

- β primary MPM intra prediction modes may be selected preferentially through the intra prediction mode of a neighboring block to configure β intra prediction mode candidates. In this case, according to this embodiment, only an intra prediction mode included in an intra prediction mode range (e.g., specific modes p and q) may be selected. Here, β may be an arbitrary number within X (which may mean the number of intra prediction modes that may be used according to the embodiment).

- After selecting all of the β primary MPM intra prediction modes, γ secondary MPM intra prediction modes may be selected preferentially through the intra prediction mode of a neighboring block to configure γ intra prediction mode candidates. In this case, an intra prediction mode included in a secondary MPM may be selected not to overlap with an intra prediction mode in a primary MPM. In addition, when selecting a candidate, only an intra prediction mode included in an intra prediction mode range (e.g., between specific modes p and q) may be selected. Here, γ may be an arbitrary number within X-β.

- Primary MPM and secondary MPM indexes may be binarized through truncated unary binarization and encoded and decoded. Non-MPM X-β-γ intra prediction modes may be encoded and decoded through truncated binary binarization.

- A default mode in a MPM may be determined in the order of the high selection frequency among the selected X intra prediction modes such as planar (no.0), a vertical mode (no.50), DC and another specific mode (e.g., no.66), based on for example, VVC.

Meanwhile, the selection order and number of intra prediction mode candidates of a neighboring block may follow a method selected in ECM. It is the same as described above by referring to FIG. 9(A) and (B), so an overlapping description is omitted.

Meanwhile, a pixel position and search order for primary and secondary MPM search are not limited to this example, and an intra prediction candidate may be selected in various ways according to an intra prediction mode in above and left reference samples. In addition, as described above, in order to select more intra prediction candidates, an intra prediction candidate may also be selected by searching the above and left reference samples of a plurality of lines.

According to this embodiment, when encoding and decoding an intra prediction mode, it is not limited to the example, and various mode encoding and decoding methods may be applied according to used intra prediction mode X.

As an example, it is also possible to determine the intra prediction mode candidate of a current block based on DIMD or TIMD, or to determine the intra prediction mode of a current block. In other words, the intra prediction mode candidate or the intra prediction mode of a corresponding block may be inferred and applied by utilizing a neighboring reference sample such as DIMD or TIMD.

As an example, a mode candidate inference method used in DIMD may be applied to predict the intra prediction mode of a current block. In other words, a pixel gradient may be calculated by using only an above reference sample area, and the first intra prediction mode or the second prediction mode obtained through a corresponding gradient may be set as the intra prediction mode candidate of a current block. Here, one of the first intra prediction mode or the second prediction mode may be used as it is, or as described in the example, may be excluded when it is not included in X intra prediction modes. When the first and the second are not included in X intra prediction modes, only vertical planar prediction may be applied.

As another example, a mode inference method used in TIMD may be applied to predict the intra prediction mode of a current block. In other words, TIMD template matching may be performed by using only an above reference sample area, and as described above, only X intra prediction modes may be considered. An intra prediction mode candidate to which TIMD template matching will be applied may be selected based on a MPM, a primary MPM or a secondary MPM in the embodiment, or all of the X intra prediction modes may be selected, or may be selected in the same manner as a method currently used in TIMD.

As another example, the existing DIMD mode and a method proposed in this embodiment may be combined to select and apply the intra prediction mode of a corresponding block simultaneously with applying a method proposed in this embodiment:

- The planner mode of the existing DIMD may be substituted with a vertical planner mode.
- The DC of the existing DIMD may be substituted with a method using only an above reference sample.
- Only an above reference sample may be used to calculate a gradient and select a prediction mode only within X intra prediction mode candidates.

As another example, the existing TIMD mode and a method proposed in this embodiment may be combined to select and apply the intra prediction mode of a corresponding block simultaneously with applying a method proposed in this embodiment:

- The planner mode of the existing DIMD may be substituted with a vertical planner mode.
- The DC of the existing DIMD may be substituted with a method using only an above reference sample.
- TIMD template matching may be performed by using only an above reference sample area.
- An intra prediction mode candidate to which TIMD template matching will be applied may be selected based on a MPM, a primary MPM or a secondary MPM in the embodiment, or all of the X intra prediction modes may be selected, or may be selected in the same manner as a method currently used in TIMD.

Meanwhile, whether to apply the embodiment of the present disclosure may be signaled as specific information in a VPS, a SPS, a PPS, a picture header, a slice header, DCI, etc. that are a high-level syntax (HLS). As an example, in order to determine whether to apply a method proposed in this embodiment in the unit of a PPS, information on whether to apply a method proposed in this embodiment in a PPS may be signaled.

In addition, a method proposed in this embodiment, may adaptively select whether to apply without transmitting additional information to a decoder as in the method, or may transmit additional information on whether to apply a method proposed in this embodiment to a decoder to determine whether to apply. As an example, it may be signaled by using a 1-bit flag representing whether to apply a method proposed in this embodiment in the unit of a CTU or a CU. Alternatively, when a method proposed in this embodiment may be applied according to the size or shape of a specific block or whether a specific condition exists, it may be signaled by using a 1-bit flag representing whether to apply a method proposed in this embodiment only in that case. As an example, when a block height is a specific multiple (e.g., 4 times) or higher of a block width, a method proposed in this embodiment may not be applied, and accordingly, the signaling of additional information on whether to apply accordingly may be omitted.

Meanwhile, under a specific condition, whether to apply a method proposed in this embodiment may be implicitly inferred. As an example, when the left reference sample of a current block does not exist at the left boundary of an image, or when a left reference sample may not be used, it may be determined that signaling information (e.g., a flag) representing whether to apply a method proposed in this embodiment is omitted and a method proposed in this embodiment is always applied. In addition, when the left reference sample of a current block is a CTU boundary/a tile boundary/a slice boundary/a sub-picture boundary, it may be determined that a method proposed in this embodiment is applied after omitting the signaling of information (e.g., a flag) representing whether to apply a method proposed in this embodiment.

Meanwhile, whether to signal information representing whether to apply a method proposed in this embodiment at a low level (e.g., a coding unit) may be adaptively determined according to information representing whether to apply a method proposed in this embodiment at a high level defined in a high level syntax (HLS). As an example, when the value of information representing whether to apply a method proposed in this embodiment in a SPS is false (e.g., 0), i.e., when a method proposed in this embodiment is not used in the unit of a SPS, it is determined that a method proposed in this embodiment is not applied even in a coding unit that is a low level, and the signaling of information representing whether to apply accordingly may not be performed.

According to Embodiment 1 of the present disclosure, intra prediction efficiency may be improved.

## Embodiment #2

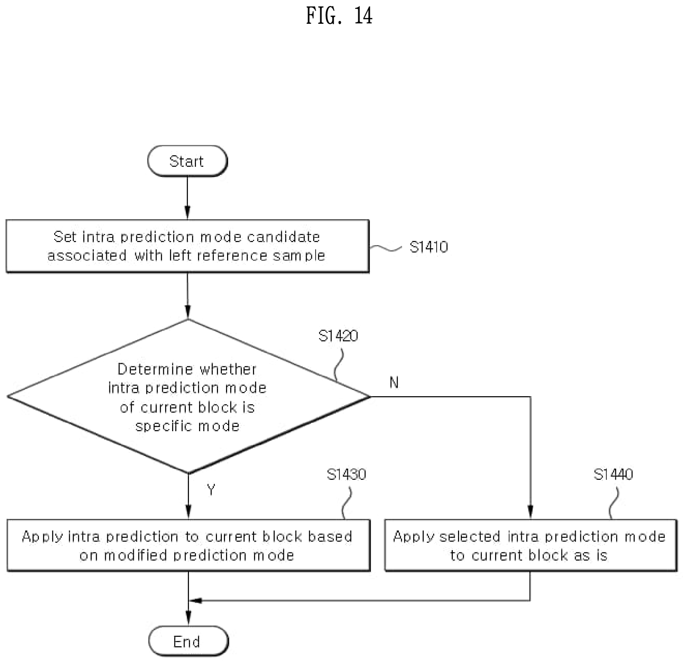

This embodiment proposes a method for generating an intra prediction block by using only an intra prediction mode that performs prediction mainly based on the left of a current block, i.e., a left reference sample. It is described by referring to FIG. 14 showing an image encoding method and/or an image decoding method according to an embodiment of the present disclosure and other drawings.

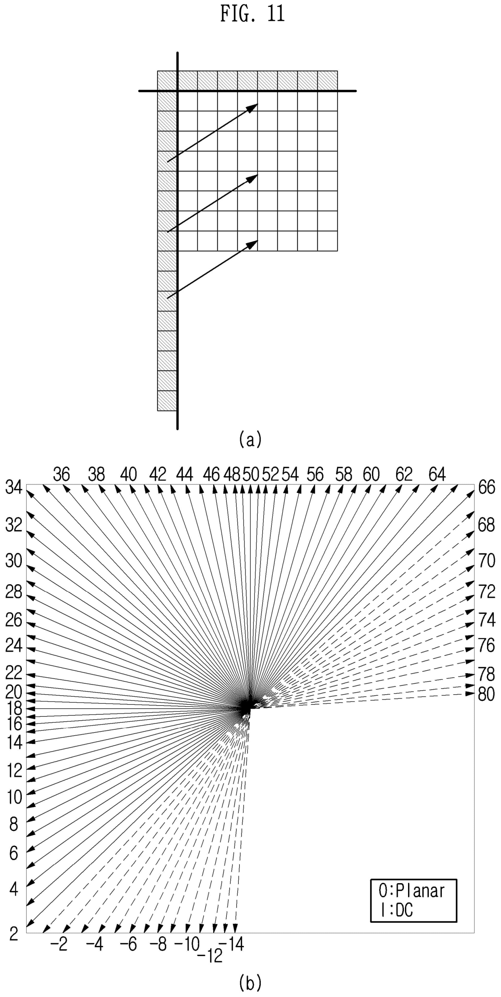

First, as an example, S1420 and S1440 shown in FIG. 14 may correspond to S1020 and S1040 in FIG. 10, respectively. As described above, intra prediction, i.e. intra prediction, may be performed by using partially selected modes. The partially selected modes may mean a mode selected based on the position (e.g., left) of a reference sample, e.g., modes restricted to a specific range. To this end, an intra prediction mode candidate associated with the left reference sample of a current block may be set S1410. After S1410, although not shown in FIG. 14, a decoder may determine an intra prediction mode by obtaining information on an intra prediction mode from a bitstream. Meanwhile, an encoder may select and determine an intra prediction mode from intra prediction mode candidates and encode information on a selected intra prediction mode into a bitstream. Afterwards, whether the intra prediction mode of a current block is a specific mode (e.g., a planar mode or a DC mode) may be determined S1420. When the intra prediction mode of a selected current block is a planar mode or a DC mode, intra prediction may be applied to a current block based on a modified DC or planar (horizontal planar) prediction mode S1430, and when the intra prediction mode of a selected current block is not a planar mode or a DC mode, a selected intra prediction mode may be applied to a current block as it is S1440. It is described in detail by referring to FIGS. 11 to 13.

FIG. 11 is a diagram showing an example of an intra prediction method that may be applied to the present disclosure. More specifically, FIG. 11 is an example of a method for performing intra prediction by using only a left reference sample, wherein the left, i.e., (A) is a drawing showing an example of intra prediction based on an intra prediction direction in a 8x8 block and the right, (B) is a drawing showing the intra prediction direction and number of VVC.

FIG. 11(A) is an example of an intra prediction direction (e.g., intra prediction mode 6 for VVC, refer to FIG. 11(B)) that predicts a current block by using only a left reference sample. As shown in FIG. 11, in horizontal intra prediction (e.g., no.6 for VVC), other intra prediction modes (e.g., intra prediction mode 18 for VVC) may perform intra prediction by using only a left reference sample located on the left of a current block. Meanwhile, as another example, when applying the wide angle intra prediction of VVC, modes - 14 to 18 may be a mode that uses only a left reference sample.

In the following embodiment of the present disclosure, a technology is proposed that performs intra prediction by combining only intra prediction that performs prediction mainly based on a left reference sample and signals prediction information as in an example above. In other words, when applying a method proposed in this embodiment, intra prediction may be applied by adaptively selecting only intra prediction that performs prediction mainly based on a left reference sample as in the following example.

As an example, when performing prediction mainly based on a left reference sample, it may be restricted to use only an intra prediction mode within a specific range (e.g., p to q):

1. Only an intra prediction mode less than or equal to a horizontal intra prediction mode number (e.g., 18 for being VVC-based) may be used. For example, for being VVC-based, it may be restricted to use only intra prediction modes 2 to 18 (-14 to 18 when a wide angle mode is applied).

2. Only an intra prediction mode less than a diagonal intra prediction mode number (e.g., 34 for being VVC-based) may be used. For example, for being VVC-based, it may be restricted to use only intra prediction modes 2 to 33 (-14 to 33 when a wide angle mode is applied).

3. There may be a limit that only an intra prediction mode greater than or equal to a horizontal intra prediction mode number (e.g., 18 for being VVC-based) but less than a vertical intra prediction mode number (e.g., 50 for being VVC-based) is used. As an example, for being VVC-based, it may be restricted to use only intra prediction modes 18 to 49.

As in an example above, it may be restricted to perform intra prediction by using only an intra prediction mode within a specific range (e.g., intra prediction modes p to q). As an example, p and q may have a value from 0 to 80, and p≤q.

Meanwhile, when applying a method proposed in this embodiment, a wide angle intra prediction mode may or may not be applied. In other words, an intra prediction mode with a negative number may be considered (e.g., -1 to -14 for being VVC-based) or only an intra prediction mode with a specific number or higher (e.g., intra prediction mode number 2 or higher for being VVC-based) may be used.

In addition, this embodiment may also be applied to non-directional intra prediction such as PLANAR and DC. When applying a DC mode to a method proposed in this embodiment described above, a DC value may be calculated by using only the left reference sample of a current block. As another example, when applying a planar mode to a method proposed in this embodiment, a horizontal planar mode may be applied as in the following equation. FIG. 12 is a diagram showing an example of a block for horizontal planar prediction according to an embodiment of the present disclosure.

[Equation 4] $pred_{hor}(x, y) = ((W - 1 - x) * rec(-1, y) + (x + 1) * rec(W, -1) + (W \gg 1)) \gg log_2 W$    [Equation 4]

In Equation above, W may mean the width of a block, and (x, y) may mean a coordinate within a block. rec(x, y) may mean a reference sample at a (x,y) position and $pred_{hor}(x, y)$ may mean a value predicted by a horizontal planar at a (x,y) position.

Meanwhile, when signaling the mode information of an intra prediction mode applied in a method proposed in this embodiment, a method in the following example may be used:

-    Encoding and decoding may be performed through appropriate binarization for an intra prediction mode that is selected adaptively based on X, the number of available intra prediction modes.

In the method, X may mean the number of intra prediction modes that may be used when applying a method proposed in this embodiment. For example, for being VVC-based, only intra prediction modes 2 to 18 are used in the example, and when planar (horizontal planar) and a DC mode are included, X may be 19.

As an example, for the signaling of an intra prediction mode selected in this embodiment described above, truncated binary coding may be performed on an intra prediction mode based on X, the number of intra prediction mode candidates, and may be signaled.

Alternatively, after selecting a MPM intra prediction mode candidate first through the intra prediction mode search of a neighboring block as in HEVC/VVC, the information of a selected intra prediction mode may be transmitted adaptively based on MPM and non-MPM lists. The following example relates to an example in which an intra prediction mode is divided into MPM and non-MPM modes and is encoded and decoded. FIG. 12 is a diagram showing an example of a MPM mode-based neighboring block search position in a 8x8 block according to an embodiment of the present disclosure.

-    β intra prediction mode candidates may be selected by selecting β MPM intra prediction modes preferentially through the intra prediction mode of a neighboring block. When selecting the intra prediction mode candidate of a neighboring block, only an intra prediction mode included in an intra prediction mode range (e.g., between p and q) proposed in this embodiment may be selected. β may be an arbitrary number within X (which may mean the number of intra prediction modes that may be used according to the embodiment).
-    A MPM index may be binarized through truncated unary binarization and encoded, signaled and decoded. Non-MPM X-β intra prediction modes may be encoded and decoded through truncated binary binarization.
-    A default mode in a MPM may be determined in the order of the high selection frequency among the selected X intra prediction modes such as planar (no.0 for being VVC-based), horizontal (no.18 for being VVC-based), DC (no.1 for being VVC-based) or another intra prediction mode (e.g. no.2 for being VVC-based).

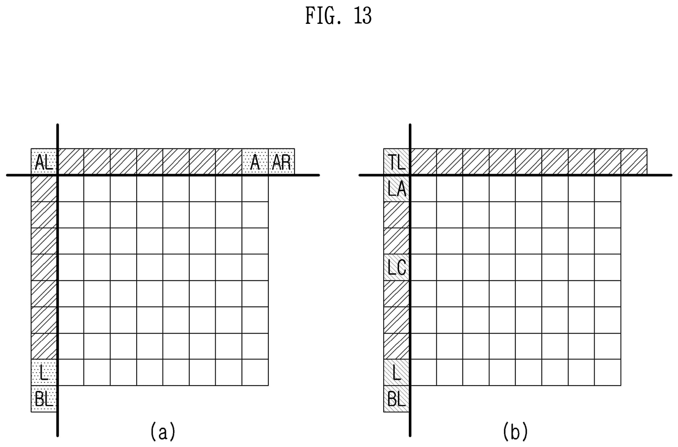

As an example, the selection order and number of intra prediction mode candidates using a neighboring block may follow a method for selecting in HEVC, VV, or ECM. FIG. 13 is a diagram for describing an exemplary search position of a neighboring block for MPM when applying the embodiment of the present disclosure in a 8x8 block according to an embodiment of the present disclosure. More specifically, FIG. 13(A) is a drawing for describing an example of a neighboring block search position for MPM selection in ECM according to an embodiment of the present disclosure, and FIG. 13(B) is a drawing for describing an example of a neighboring block search position setting according to an embodiment of the present disclosure. As an example, when three MPMs are selected for a method proposed in this embodiment, an intra prediction candidate may be searched and selected in the order of blocks including L->BL->LA->TL->LC pixels in FIG. 13(B). In the above, LC may mean a reference sample having a y-coordinate that is a value obtained by dividing the width value of a current block by 2.

Meanwhile, a pixel position and search order for a MPM search are not limited to this example, and an intra prediction candidate may be selected in various ways according to an intra prediction mode in above and left reference samples. In addition, in order to select more intra prediction candidates, an intra prediction candidate may be selected by searching the above and left reference samples of a plurality of reference sample lines.

Alternatively, primary MPM and secondary MPM intra prediction mode candidates may be selected preferentially through the intra prediction mode search of a neighboring block such as ECM. The following example relates to an example that an intra prediction mode is divided into primary MPM, secondary MPM and non-MPM modes and is encoded and decoded:

- $\beta$ intra prediction mode candidates may be selected by selecting $\beta$ primary MPM intra prediction modes preferentially through the intra prediction mode of a neighboring block. When selecting the intra prediction mode candidate of a neighboring block, only an intra prediction mode included in an intra prediction mode range (e.g., between p and q) proposed in this embodiment may also be selected. In this case, $\beta$ may be an arbitrary number within X (which may mean the number of intra prediction modes that may be used according to the embodiment).

- After selecting all of the $\beta$ primary MPM intra prediction modes, $\gamma$ intra prediction mode candidates may be selected by selecting $\gamma$ secondary MPM intra prediction modes preferentially through the intra prediction mode of a neighboring block. An intra prediction mode included in a secondary MPM may not need to overlap with an intra prediction mode in a primary MPM. As an example, when selecting the intra prediction mode candidate of a neighboring block, only an intra prediction mode included in an intra prediction mode range (e.g., between p and q) proposed in this embodiment may also be selected. $\gamma$ may be an arbitrary number within X-$\beta$.

- Primary MPM and secondary MPM indexes may be binarized through truncated unary binarization and encoded and decoded. Non-MPM X-$\beta$-$\gamma$ intra prediction modes may be encoded and decoded through truncated binary binarization.

- It may be determined in the order of the high selection frequency among the selected X intra prediction modes such as planar (e.g., 0 for VVC), horizontal (e.g., 18 for VVC), DC mode or another specific intra prediction mode (e.g., 2 for VVC) in the MPM.

As an example, the selection order and number of intra prediction mode candidates of a neighboring block may follow a method selected in ECM. FIG. 13(A) may relate to an example of a neighboring block search position for primary and secondary MPM selection in ECM according to an embodiment of the present disclosure. FIG. 13(B) may relate to an example for a neighboring block search position setting according to an embodiment of the present disclosure. As an example, when selecting three MPMs for a method proposed in this embodiment, an intra prediction candidate may be searched and selected in the order of blocks including L->BL->LA->TL->LC pixels in FIG. 13(B). In the above, LC may mean a reference sample having a y-coordinate that is a value obtained by dividing the height value of a current block by 2.

Meanwhile, a pixel position and search order for primary and secondary MPM search are not limited to this example, and an intra prediction candidate may be selected in various ways according to an intra prediction mode in above and left reference samples. In addition, in order to select more intra prediction candidates, an intra prediction candidate may be selected by searching above and left reference samples from a plurality of sample lines.

When encoding and decoding an intra prediction mode in a method proposed in this embodiment, it is not limited to the example, and various mode encoding and decoding methods may be applied according to a used intra prediction mode.

Alternatively, it is possible to determine the intra prediction mode candidate of a current block such as DIMD or TIMD, or to determine the intra prediction mode of a current block. In other words, the intra prediction mode of a current block may be determined by inferring the intra prediction mode candidate or the intra prediction mode of a corresponding block by utilizing a neighboring reference sample such as DIMD or TIMD.

A mode candidate inference method used in DIMD may be applied for mode prediction in a method proposed in this embodiment. In other words, a pixel gradient may be calculated by using only a left reference sample area, and the first intra prediction mode or the second prediction mode obtained through a corresponding gradient may be set as the intra prediction mode candidate of a current block. Here, the first intra prediction mode or the second prediction mode may be used as it is, or may be excluded when it is not included in X intra prediction modes in the example. When the first and the second are not included in X intra prediction modes, only horizontal planar prediction may be applied.

Meanwhile, as an example, a mode inference method used in TIMD may be applied for intra mode prediction as described above. In other words, TIMD template matching is performed by using only a left reference sample area, and only X intra prediction modes in the example may be considered. An intra prediction mode candidate to which TIMD template matching will be applied may be selected such as a MPM, a primary MPM or a secondary MPM in the embodiment, or all of the X intra prediction modes may be selected, or may be selected in the same manner as a method currently used in TIMD.

In addition, a DIMD mode and a method proposed in this embodiment may be combined to select and apply the intra prediction mode of a corresponding block simultaneously with applying a method proposed in this embodiment:

- The planar of the existing DIMD may be substituted with horizontal planar.
- The DC of the existing DIMD may be substituted with a method using only a left reference sample.
- Only a left reference sample may be used to calculate a gradient and select a mode only within X intra prediction mode candidates.

In addition, the existing TIMD mode and a method proposed in this embodiment may be combined to select and apply the intra prediction mode of a corresponding block simultaneously with applying a method proposed in this embodiment:

- The planar of the existing TIMD may be substituted with horizontal planar.
- The DC of the existing TIMD may be substituted with a method using only a left reference sample.
- TIMD template matching may be performed by using only a left reference sample area.
- An intra prediction mode candidate to which TIMD template matching will be applied may be selected such as a MPM, a primary MPM or a secondary MPM in the embodiment, or all of the X intra prediction modes may be selected, or may be selected in the same manner as a method currently used in TIMD.

Meanwhile, information representing whether to apply an intra prediction mode selection method according to this embodiment described above may be transmitted in a VPS, a SPS, a PPS, a picture header, a slice header and DCI that are a high-level syntax (HLS). As an example, in order to determine whether to apply a method proposed in this embodiment in the unit of a PPS, information on whether to apply a method proposed in this embodiment may be transmitted in a PPS.

In addition, information representing whether to apply as above may not be signaled to a decoder as additional information, but may be adaptively determined. Alternatively, additional information representing whether to apply a method proposed in this embodiment may be explicitly signaled to a decoder, and whether to apply may be determined based on corresponding information. As an example, a 1-bit flag may be used to indicate whether to apply a method proposed in this embodiment in the unit of a CTU or a CU, and may be signaled to a decoder. Alternatively, when a method proposed in this embodiment may be applied according to the size or shape of a specific block or whether a specific condition exists, it may be signaled by specific information (e.g., a 1-bit flag) on whether to apply a method proposed in this embodiment only in that case. As an example, when the width of a current block is a specific multiple (e.g., 4 times) or a block height, a method proposed in this embodiment may not be applied, and accordingly, the signaling of information representing whether to apply accordingly may be omitted.

As an example, whether to apply a method proposed in this embodiment may be implicitly inferred by a specific condition described above. As an example, when the left reference sample of a current block does not exist such as the left boundary of an image, or when a left reference sample may not be used, a method proposed in this embodiment may always be performed after omitting the signaling of information representing whether to apply a method proposed in this embodiment. In other words, an intra prediction mode selection method proposed in this embodiment may be applied. As an example, when the left reference sample of a current block is a CTU boundary/a tile boundary/a slice boundary/a sub-picture boundary, a method proposed in this embodiment may always be applied after omitting the signaling of information representing whether to apply a method proposed in this embodiment.

As an example, when information representing whether to apply a method proposed in this embodiment at a high level is defined in a HLS, it may be adaptively determined whether to signal information representing whether to apply a method proposed in this embodiment at a low level (e.g., a coding unit). As an example, when information representing whether to apply a method proposed in this embodiment at a SPS level is false (e.g., 0), i.e., when it is determined that a method proposed in this embodiment is not used in the unit of a SPS, a method proposed in this embodiment in a coding unit is not applied, and the signaling of information on whether to use accordingly may not be performed.

According to Embodiment 2 of the present disclosure, intra prediction efficiency may be improved.

**Embodiment #3**

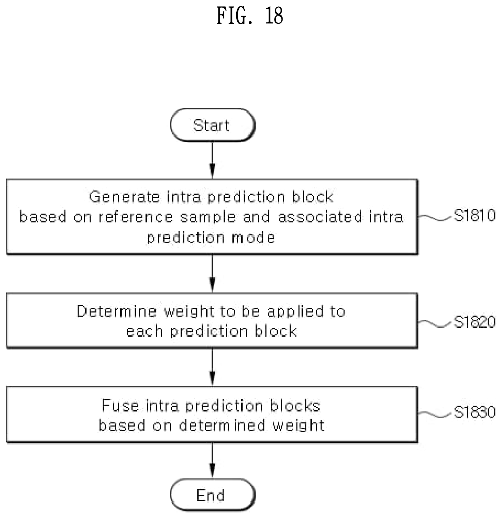

This embodiment proposes a method for combining an intra prediction mode that performs prediction mainly based on an above reference sample proposed in embodiment 1 above and an intra prediction mode that performs prediction mainly based on a left reference sample proposed in the embodiment 2. It is described by referring to FIG. 18 showing an image encoding method and/or an image decoding method according to an embodiment of the present disclosure and other drawings.

First, as an example, as described above, intra prediction, i.e. intra prediction, may be performed by using partially selected modes. The partially selected modes may mean a mode selected based on the position (e.g., left) of a reference sample, e.g., modes restricted to a specific range. Afterwards, an intra predictor, i.e., a prediction block may be generated based on a reference sample restricted to a specific position (e.g., the top or left area of a current block) and an associated intra prediction mode S1810. As an example, an intra prediction block generated based on the above reference sample of a current block and an intra prediction mode associated therewith may be an above prediction block (e.g., the first prediction block, pred_above), and an intra prediction block generated based on the left reference sample of a current block and an intra prediction mode associated therewith may be a left prediction block (e.g., the first prediction block, pred_left). Afterwards, weights w0 (e.g., the first weight) and w1 (e.g., the second weight) to be applied to each prediction block may be determined S1820. Afterwards, generated intra prediction blocks may be fused based on a determined weight S1830. In this case, fusion may be derived as a value obtained by multiplying each prediction block by a weight and adding it (e.g., a final prediction block pred = w0 * pred_above + w1 * pred_left).

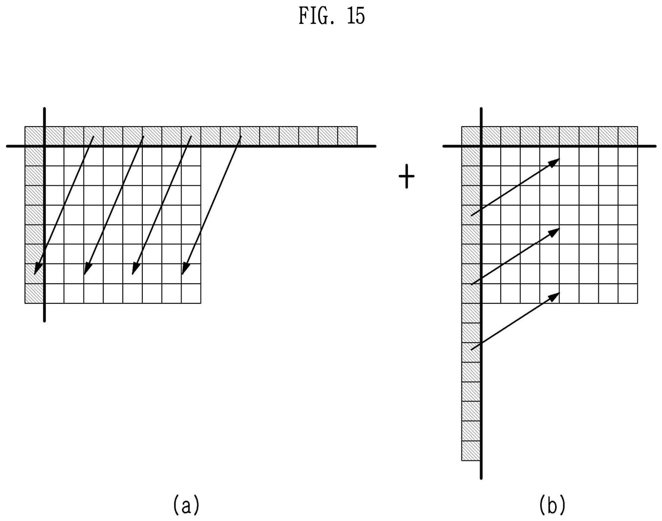

Meanwhile, for the clarity of a description, FIG. 18 assumes two prediction blocks and two weights, but this is just an embodiment of the present disclosure. In other words, in other embodiments, there may be at least two prediction blocks and there may also be at least two weights. In addition, in an embodiment to be described below, a weight may be determined for each pixel within a prediction block. It is described in more detail by referring to FIGS. 15 to 17 below.

FIG. 15 is a diagram for describing an example of a method for combining an intra prediction method for predicting mainly based on an above reference sample and an intra prediction method for predicting mainly based on a left reference sample according to an embodiment of the present disclosure. More specifically, FIG. 15 shows an example of a method for combining prediction blocks generated through the intra prediction method, where (A) on the left mainly uses an above reference sample, and (B) on the right mainly uses a left reference sample.

As an example, an intra prediction block generated based on embodiment #1 and an intra prediction block generated based on embodiment #2 may be combined as in the method of the equation in the following example.

[Equation 5]

$$pred = w0 * pred\_above + w1 * pred\_left$$

In the equation, *pred* may mean a combined prediction block proposed in this embodiment, and *pred_above* may mean a prediction block (e.g., the first prediction block) predicted by using an intra prediction mode that performs prediction mainly based on an above reference sample (embodiment #1). **pred_left** may mean a prediction block (e.g., the second prediction block) predicted by using an intra prediction mode that performs prediction mainly based on a left reference sample (embodiment #2). WO may mean the weight of prediction block **pred_above** (e.g., first weight), and w1 may mean the weight of prediction block **pred_left** (e.g., second weight). When combining two prediction blocks, each pixel at the same position in prediction blocks **pred_above** and **pred_left** may generate a combined prediction pixel at a corresponding position by using the first weight w0 and the second weight w1.

In an embodiment, *w0* and *w1* above may be determined as a fixed value as follows.

[Equation 6]

$$w0 = w1 = 1/2$$

According to Equation 6, in an embodiment of the present disclosure, the first weight and the second weight may be the same. As an example, the first weight and the second weight may be 1/2, and two prediction blocks **pred_above** and **pred_left** may always be combined equally at a 1:1 ratio. As an example, the second weight may be determined based on the first weight.

According to another embodiment, the first weight *w0* and the second weight *w1* may be determined as follows.

[Equation 7]

$$w0 = \alpha, \ w1 = 1 - \alpha$$

In Equation 7, the first weight *w0* may have a fixed specific value, and the second weight *w1* may have fixed value

**1 - $\alpha$.** In the equation, specific value $\alpha$ may be an arbitrary value that may be selected from all numbers. Alternatively, $\alpha$ may be a value predefined by a different condition in a decoder and an encoder. As an example, the first weight and the second weight may be a different value. As an example, the second weight may be determined based on the first weight.

As another example, the first weight and the second weight may be determined variably as follows. As an example, the first weight and the second weight may be determined based on the size (e.g., width and/or height) of a current block.

[Equation 8]

$$w0 = \text{width}/(\text{width} - \text{height}), \quad w1 = 1 - w0$$

In Equation 8 above, variable width may mean the width of a current block, and variable height may mean the height of a current block. As an example, for a 16x4 block, when a weight is derived by Equation 8, the first weight **w0** may become 16/20 = 0.8 and the second weight **w1** may become 4/20 = 0.2. As an example, the second weight may be determined based on the first weight.

According to another embodiment, the first weight **w0** and the second weight **w1** may be determined variably as follows.

[Equation 9]

$$w0 = \text{N}_{above}/(\text{N}_{above} + \text{N}_{left}), \quad w1 = 1 - w0$$

The first weight and the second weight are applied to the first prediction block and the second prediction block, respectively, so they may be derived based on the number of reference samples used to generate the first prediction block and the second prediction block, respectively. In Equation 9 above, variable $\text{N}_{above}$ may mean the number of above reference samples used for prediction, and $\text{N}_{left}$ may mean the number of left reference samples used for prediction. As an example, the second weight may be determined based on the first weight.

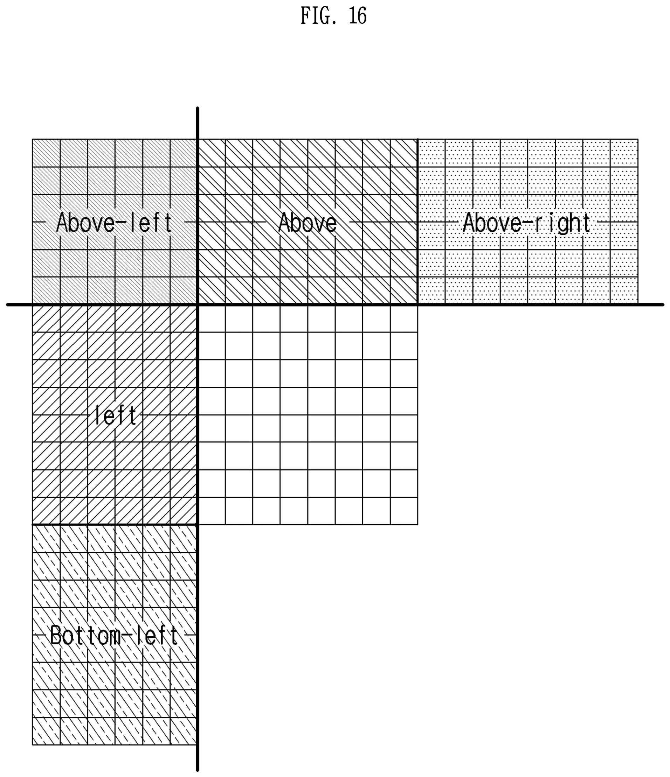

According to another embodiment, the first weight **w0** and the second weight **w1** may be determined variably as follows. It is described by referring to Equation 10 to FIG. 16. FIG. 16 is a diagram for describing an example of an intra prediction block and its neighboring reference sample area according to an embodiment of the present disclosure.

[Equation 10]

$$w0 = \text{E}_{left}/(\text{E}_{above} + \text{E}_{left}), \quad w1 = 1 - w0$$

As an example, the first weight w0 and the second weight w1 may be derived based on an error value derived by using a reference sample value. In Equation 10 above, variable $\text{E}_{above}$, as in the template matching method of TIMD, may be a value derived by calculating an error value size with an actual reference sample value after applying an intra prediction mode applied in prediction block **pred_above** derived by using an above reference sample mentioned above to a reference sample area. In this case, when calculating $\text{E}_{above}$ using a neighboring reference sample, as shown in FIG. 16, a neighboring reference sample (e.g., above/above-left/above-right/left/bottom-left, etc.) may be used. Alternatively, only some of the reference samples in the five areas may be used. For example, only an above reference sample may be used, or only an above-left reference sample may be used, or only an above-right reference sample may be used, or only a left reference sample may be used, or only a bottom-left reference sample may be used. Alternatively, some of the reference samples in the five areas may be combined and used, and based on this, an error value may be calculated. In addition, for the number of reference sample lines, 4 lines may be use in the same manner as the existing TIMD method, or more or fewer (e.g., 3 lines, or 5 lines, etc.) reference sample lines may be used. According to an embodiment, only a left reference sample may be used or only an above reference sample may be used to calculate variable $\text{E}_{above}$. Alternatively, left and above reference samples may be used, or above, above-right and above-left reference samples may be used. Alternatively, all of the left, above, above-right, bottom-left and above-left reference samples may be used. Meanwhile, in the equation, variable $\text{E}_{left}$, as in the template matching method of TIMD, may be a value derived by calculating an error value size with an actual reference sample value after applying an intra prediction mode applied to prediction block **pred_left** generated by using a left reference sample mentioned above to a reference sample area. As an example, as described above in $\text{E}_{above}$, when calculating $\text{E}_{left}$ using a neighboring reference sample, a neighboring reference sample (e.g., above/above-left/above-right/left/bottom-left, etc.) may be used. Alternatively, only some of the reference samples in the five areas may be used. For example, only an above reference sample may be used, or only an above-left reference sample may be used, or only an above-right reference sample may be used, or only a left reference sample may be used, or only a bottom-left reference sample may be used. Alternatively, some of the reference samples in the five areas may be combined and used, and based on this, an error value may be calculated. In addition, for the number of reference sample lines, 4 lines may be used in the same manner as the existing TIMD method, or more or fewer (e.g., 3 lines, or 5 lines, etc.) reference sample lines may be used. In addition, only one part of the reference samples in the five areas may be used or they may be combined to derive an error value.

In the embodiment, when calculating variables $E_{above}$ and $E_{left}$, error values $E_{above}$ and $E_{left}$ may be derived by utilizing the mean-square error (MSE), the sum of absolute transformed differences (SATD) or the sum of absolute differences (SAD), and when the number of reference samples for calculating $E_{above}$ and $E_{left}$ is different, an error value may be further coordinated through a normalization process.

Alternatively, in this embodiment, a prediction block generated through an intra prediction method that performs prediction mainly based on an above reference sample ((A) of FIG. 15) and a prediction block generated through an intra prediction method that performs prediction based on a left reference sample ((B) of FIG. 15) may be combined as in a method in the following equation.

[Equation 11]

$$pred(x, y) = w0(x, y) * pred\_above(x, y) + w1(x, y) * pred\_left(x, y)$$

In the equation, (x,y) may mean a coordinate within a block for prediction. As an example, **_pred_above_** may be a prediction block (e.g., the first prediction block) generated by using an above reference sample, and **_pred_left_** may be a prediction block (e.g., the second prediction block) generated by using a left reference sample. The first weight w0 may be applied to the first prediction block, and the second weight w1 may be applied to the second prediction block, through which final prediction block pred may be derived. In this case, different weights **_w0_** and **_w1_** may be adaptively applied to a pixel position within each prediction block. In other words, a weight value may be different according to (x, y).

As an example, a method for adaptively selecting the first weight **_w0_** and the second weight **_w1_** at a pixel position is proposed as follows.

[Equation 12]

$$w0(x, y) = (y + 1)/(x + y + 2), \quad w1(x, y) = 1 - w0(x, y)$$

$$w0(x, y) = \frac{1}{2} + \frac{x}{2 * width} - \frac{y}{2 * height}, \quad w1(x, y) = 1 - w0(x, y)$$

$$w0(x, y) = \frac{1}{2} + \frac{x}{2 * width} - \frac{y}{height}, if(E_{above} > K * E_{left})$$

$$w0(x, y) = \frac{1}{2} + \frac{x}{width} - \frac{y}{2 * height}, if(E_{left} > K * E_{above})$$

$$w0(x, y) = \frac{1}{2} + \frac{x}{2 * width} - \frac{y}{2 * height}, otherwise$$

$$w1(x, y) = 1 - w0(x, y)$$

In the equation, width and height may mean the width and height of a current block, respectively. In addition, as shown in the embodiment, variable $E_{above}$ may be a value obtained by calculating an error value size with an actual block neighboring reference sample value after predicting a neighboring reference sample value of a current block by using the intra prediction block obtained mainly using an above reference sample, and variable $E_{left}$ may be a value obtained by calculating an error value size with an actual block neighboring reference sample value after predicting a neighboring reference sample value of a current block by using intra prediction blocks obtained mainly using a left reference sample.

According to three equations proposed above, a combined weight may be selected to be inversely proportional to a distance from each pixel position to left and above reference samples, and accordingly, a prediction block may be generated in a more sophisticated way. It may improve coding efficiency

Meanwhile, in this embodiment, since information on the intra prediction mode of each of a prediction block generated through an intra prediction method that performs prediction mainly based on an above reference sample ((A) of FIG. 15) and a prediction block generated through an intra prediction method that performs prediction mainly based on a left reference sample ((B) of FIG. 15) may be explicitly signaled, a method proposed in embodiment #1 and a method proposed in embodiment #2 may be combined and used for signaling corresponding information. In other words, information on two intra prediction modes for two prediction blocks may be explicitly signaled separately, respectively.

Alternatively, as another example, a method for signaling information on an intra prediction mode according to embodiment #1 and a method for signaling information on an intra prediction mode according to embodiment #2 may be combined and used as in the following example. In other words, information on a plurality of (e.g., two) intra prediction modes may be signaled in one intra prediction mode candidate group (e.g., based on embodiment #1 or based on embodiment #2, etc.).

- Intra prediction mode information may be encoded and decoded through the truncated binary binarization of intra prediction modes selected based on X, the number of available intra prediction modes.

In the method, X, the number of available intra prediction modes, may be determined as the sum of the number of available intra prediction modes in an intra prediction method that performs prediction mainly based on an above reference sample in embodiment #1 and the number of available intra prediction modes in an intra prediction method that performs prediction mainly based on a left reference sample in embodiment #2.

Alternatively, after selecting a MPM intra prediction mode candidate first through the intra prediction mode search of a neighboring block as in HEVC/VVC, the information of selected intra prediction modes may be signaled adaptively based on MPM and non-MPM lists. An example in which an intra prediction mode is divided into MPM and non-MPM modes and encoded and decoded is the same as described by referring to Embodiment #1 and Embodiment #2 above, so a description thereof is omitted.

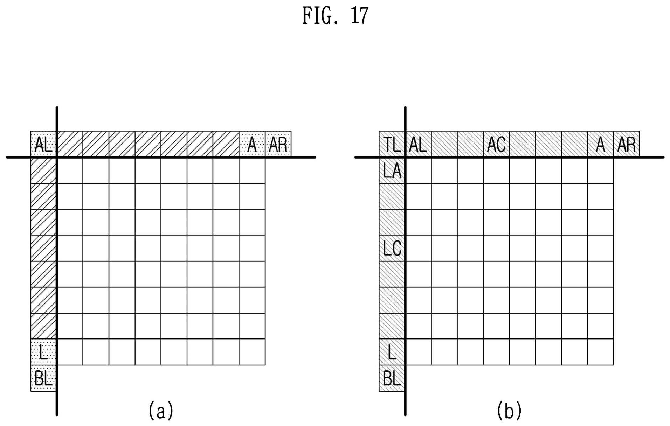

Meanwhile, FIG. 17 is a diagram showing an example of a neighboring block search position for MPM when applying a proposed method in a 8x8 block according to an embodiment of the present disclosure. The selection order and number of intra prediction mode candidates of a neighboring block may follow a method for selecting in HEVC, VV, or ECM. FIG. 17(A) shows an example of a neighboring block search position for MPM selection in ECM. Alternatively, a neighboring block search position for a method proposed in this embodiment may be set as in FIG. 17(B). As described above, when selecting three MPMs for a method proposed in this embodiment, an intra prediction candidate may be searched and selected in the order of blocks including L->A->BL->AR->TL->LC->AC->LA->AL pixels in FIG. 17(B). In the above, AC may mean a reference sample coordinate whose x-coordinate is a value obtained by dividing the width value of a current block by 2, and LC may mean a reference sample coordinate whose y-coordinate is a value obtained by dividing the height value of a current block by 2.

A pixel position and search order for a MPM search are not limited to this example, and an intra prediction candidate may be selected in various ways according to an intra prediction mode in above and left reference samples. In addition, in order to select more intra prediction candidates, an intra prediction candidate may be selected by searching the above and left reference samples of a plurality of reference sample lines.

Alternatively, primary MPM and secondary MPM intra prediction mode candidates may be selected preferentially through the intra prediction mode search of a neighboring block such as ECM. An intra prediction mode may be divided into primary MPM, secondary MPM and non-MPM modes and encoded and decoded, which is the same as described by referring to Embodiment #1 and Embodiment #2 above, so an overlapping description is omitted.

As an example, the selection order and number of intra prediction mode candidates of a neighboring block may follow a method selected in ECM. FIG. 17(A) is a drawing for an example of a neighboring block search position for primary and secondary MPM selection in ECM according to an embodiment of the present disclosure, and FIG. 17(B) is a drawing for an example of a neighboring block search position setting for a method proposed in this embodiment. As described above, when selecting three MPMs for a method proposed in this embodiment, an intra prediction candidate may be searched and selected in the order of blocks including L->A->BL->AR->TL->LC->AC->LA->AL pixels in FIG. 17(B). In the above, AC may mean a reference sample coordinate whose x-coordinate is a value obtained by dividing the width value of a current block by 2, and LC may mean a reference sample coordinate whose y-coordinate is a value obtained by dividing the height value of a current block by 2.

Meanwhile, a pixel position and search order for primary and secondary MPM search are not limited to this example, and an intra prediction candidate may be selected in various ways according to an intra prediction mode in above and left reference samples. In addition, in order to select more intra prediction candidates, an intra prediction candidate may be selected by searching above and left reference samples by using a plurality of reference sample lines.

When encoding and decoding an intra prediction mode in a method proposed in this embodiment, it is not limited to the example, and various mode encoding and decoding methods may be applied according to used intra prediction mode X.

Meanwhile, as another example, the signaling of information on an additional intra prediction modes may be excluded, such as DIMD or TIMD. In other words, the intra prediction mode candidate of a corresponding block may be predicted by utilizing a neighboring reference sample such as DIMD or TIMD. In this embodiment, a mode candidate inference method used in DIMD or TIMD may be applied to predict an intra prediction mode, which is the same as described in embodiment #1 and embodiment #2 above, so an overlapping description thereof is omitted.

In addition, by combining the existing DIMD mode and a method proposed in this embodiment, the intra prediction mode of a corresponding block may be selected and applied simultaneously with applying a method proposed in this embodiment, which is the same as described in embodiment #1 and embodiment #2 above, so an overlapping description thereof is omitted.

In addition, by combining the existing TIMD mode and a method proposed in this embodiment, the intra prediction mode of a corresponding block may be selected and applied simultaneously with applying a method proposed in this embodiment, which is the same as described in embodiment #1 and embodiment #2 above, so an overlapping description thereof is omitted.

When combining a method proposed in this embodiment, the number of combinations is not limited to the example. In other words, a combination between blocks to which intra prediction that performs prediction mainly based on multiple above reference samples is applied (Embodiment #1) may be applied, or a combination between blocks to which intra prediction that performs prediction mainly based on multiple left reference samples is applied (Embodiment #2) may be applied Alternatively, a combination between blocks to which intra prediction that performs prediction mainly based on multiple reference samples is applied and between blocks to which intra prediction that performs prediction mainly based on multiple left reference samples is applied may also be performed.

The following example shows a combination between three blocks to which a method proposed in the present invention is applied.

$$pred = w0 * pred\_above + w1 * pred\_left + w2 * pred\_left2 \; pred(x, y) = w0(x,y) * pred\_above(x, y) + w1(x, y) * pred\_left(x, y) + w2(x, y) * pred\_left2(x, y) \qquad \text{[Equation 13]}$$

In the equation, pred may mean a combined (final) prediction block proposed in this embodiment, and pred_above may mean a prediction block (e.g., the first prediction block) predicted by using an intra prediction mode that performs prediction mainly based on an above reference sample (a method in Embodiment #1). pred_left and pred_left2 may mean prediction blocks (e.g., at least two second prediction blocks, or the second prediction block and the third prediction block, respectively) predicted by using an intra prediction mode that performs prediction mainly based on a left reference sample (a method in Embodiment #2). Meanwhile, in the above, it is described that two prediction blocks are generated based on a left reference sample and one prediction block is generated based on an above reference sample, but it just corresponds to an embodiment of the present disclosure. Accordingly, at least two or one prediction block may be generated based on a left reference sample, or at least two prediction blocks may be generated based on an above reference sample. Also in this case, a weight may be determined for a prediction block or a sample in a prediction block, respectively, and the description may be extended and applied. In the equation, **(x, y)** may mean a coordinate within a block for prediction. In this case, the first weight **w0,,** the second weight **w1**, and the third weight **w2** may also be applied adaptively to a pixel position in a prediction block. Here, weights may be a different value.

In the example, prediction block pred_left and prediction block pred_left2 (e.g., at least two second prediction blocks, or the second prediction block and the third prediction block) may have a different intra prediction mode range that may be applied. As an example, in the equation, pred_left may be a block generated by using only intra prediction modes 2 to 18 for being VVC-based, pred_left2 may be a block generated by using only intra prediction modes 18 to 49 for being VVC-based, and pred_above may be a block generated by using only intra prediction modes 50 to 66 for being VVC-based. In the example, weight w0, w1, w2 may be applied equally by extending a weight setting method described in the example.

As an example, all of the three weights w0, w1 and w2 may be the same value, or may be determined in proportion to the number of intra prediction mode candidates used, respectively. In addition, w0, w1 and w2 may be a different value. In addition, a method for signaling information on an intra prediction mode when generating three prediction blocks may also be applied equally by extending a method proposed above.

Meanwhile, whether to apply a method proposed in this embodiment may be signaled in a VPS, a SPS, a PPS, a picture header, a slice header and DCI that are a high-level syntax (HLS). As an example, in order to determine whether to apply a method proposed in this embodiment in the unit of a PPS, information on whether to apply a method proposed in this embodiment may be signaled in a PPS.

In addition, according to this embodiment, whether to apply the embodiment of the present disclosure may be adaptively determined without explicit signaling as additional information, as in the method. Alternatively, additional information on whether to apply the embodiment of the present disclosure may be signaled explicitly to determine whether to apply, as in the method. As an example, whether to apply a method proposed in this embodiment in the unit of a CTU or a CU may be transmitted by using a 1-bit flag. Alternatively, when a method proposed in this embodiment may be applied according to the size or shape of a specific block or whether a specific condition exists, whether to apply a method proposed in this embodiment may be signaled by using a 1-bit flag only in that case.

As an example, under a specific condition, whether to apply a method proposed in this embodiment may be implicitly inferred. As an example, when the left reference sample of a current block does not exist such as the left boundary of an image, or when a left reference sample may not be used, when applying this embodiment, the first weight **w0** may be set as 1, and the second weight **w1** may be set as 0, or only an intra prediction mode that performs prediction mainly based on a left reference sample may be used.

As another example, in addition, when the above reference sample of a current block does not exist such as the above boundary of an image, or when an above reference sample may not be used, when applying this embodiment, the second weight **w0** may be set as 1, and the first weight **w1** may be set as 0, or only an intra prediction mode that performs prediction mainly based on a left reference sample may be used.

Meanwhile, after omitting the signaling of information representing whether to apply this embodiment, it may be pre-set that the present disclosure is always applied or not applied. For example, when the above/left reference sample of a current block is a CTU boundary/a tile boundary/a slice boundary/a sub-picture boundary, it may be set that the present disclosure is always applied or not applied after omitting the signaling of corresponding information.

Meanwhile, whether to signal information on whether to apply a method proposed in this embodiment at a low level (e.g., a coding unit) may be determined adaptively according to information on whether to apply a method proposed in this embodiment at a high level defined in a HLS. As an example, when information on whether to apply a method proposed in this embodiment in a SPS is false (e.g., 0) (i.e., when a method proposed in this embodiment is not used in the unit of a SPS), it may be determined that a method proposed in this embodiment at a low level (e.g., a coding unit) is not applied, and the signaling of information on whether to use accordingly may not be performed.

According to Embodiment 3 of the present disclosure, intra prediction efficiency may be improved.

## Embodiment of Image Encoding/Decoding Method

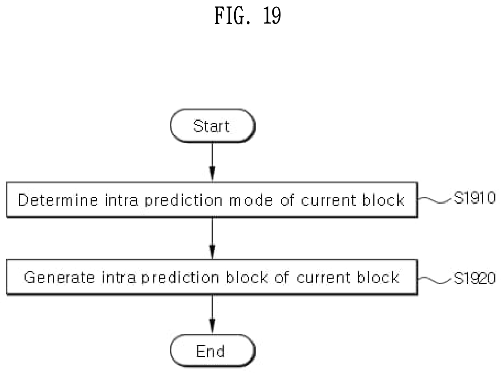

FIG. 19 is a diagram for describing an image encoding/decoding method that may be performed by an image encoding/decoding apparatus according to an embodiment of the present disclosure. FIG. 19 may be performed by an image decoding apparatus described above, or may be performed by an image encoding apparatus. In addition, all or a part of the embodiments #1, #2 and/or #3 described above may be applied to this embodiment.

Based on the description, according to an embodiment of the present disclosure, the intra prediction mode of a current block is determined S1910 and intra prediction is performed based on a determined intra prediction mode to generate the prediction block of a current block S1920, but intra prediction may be restricted to be performed by using only a reference sample within a predetermined range among the available reference samples of a current block. In this case, based on only a reference sample within a predetermined range being used, an intra prediction mode may be determined as one directional mode within a predetermined range. In addition, here, a predetermined range may be determined based on whether intra prediction is based on wide angle intra prediction. In addition, a predetermined range may be any one of the range of directional modes 50 to 66, 35 to 66 or 19 to 34. In addition, a predetermined range may be any one of the range of directional modes 2 to 18, 2 to 33 or 18 to 49. In addition, a prediction block may be generated by weighted summing the first prediction block obtained by using a reference sample within the first range and the second prediction block obtained by using a reference sample within the second range. Here, the first range and the second range may not overlap each other. In addition, the first weight applied to the first prediction block may be determined differently from a weight applied to the second prediction block. In other words, the first weight may be determined based on the size of the current block. In addition, the first weight and the second weight may be a predefined value. In addition, since it may be used alone or in combination with an embodiment described in embodiments #1 to #3, an overlapping description thereof is omitted.

According to the present disclosure, when intra predicting an image, an adaptive intra prediction block may be generated in a reference sample area and a plurality of intra prediction blocks may be fused efficiently and encoded/decoded. In addition, the encoding/decoding performance of intra prediction may be improved.

Meanwhile, since FIG. 19 corresponds to an embodiment of the present disclosure, some steps may be changed, deleted or added, and the order of performance may be changed, and it is obvious that this is also included in the scope of the present disclosure.

## Embodiment of Image Encoding Method

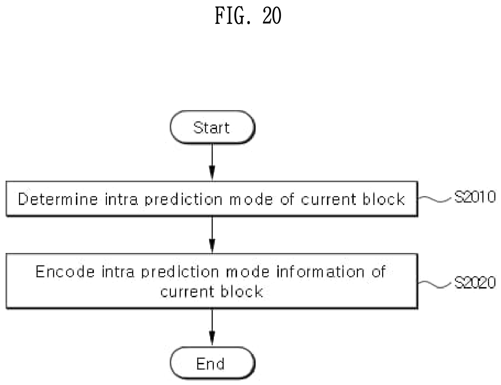

FIG. 20 is a diagram for describing an image encoding method that may be performed by an image encoding apparatus according to an embodiment of the present disclosure. FIG. 20 may be performed by an image encoding apparatus described above. In addition, all or a part of the embodiments #1, #2 and/or #3 described above may be applied to this embodiment.

Based on the description, according to an embodiment of the present disclosure, the intra prediction mode of a current block may be determined S2010, and the prediction mode information of a current block may be encoded based on a determined intra prediction mode S2020. In this case, an intra prediction mode may be determined by using only a reference sample within a predetermined range among the available reference samples of a current block. It is the same as described above by referring to other drawings including FIG. 19, so an overlapping description is omitted.

In describing an image encoding method in FIG. 20, a description that overlaps with the description is partially omitted. According to the present disclosure, when intra predicting an image, an adaptive intra prediction block may be generated in a reference sample area and a plurality of intra prediction blocks may be fused efficiently and encoded. In addition, the encoding performance of intra prediction may be improved.

Meanwhile, since FIG. 20 corresponds to an embodiment of the present disclosure, some steps may be changed, deleted or added, and the order of performance may be changed, and it is obvious that this is also included in the scope of the present disclosure.

The exemplary methods of the present disclosure are described as a series of operations for clarity of explanation, but this is not intended to limit the order in which the steps are performed, and when necessary, each step may be performed simultaneously or in a different order. To implement the method according to the present disclosure, additional steps may be included in addition to the illustrated steps, some steps may be omitted while including the remaining steps, or some steps may be omitted while including additional steps.

In the present disclosure, the image encoding apparatus or the image decoding apparatus which performs a predetermined operation (step) may perform an operation (step) to check the execution conditions or situations of the corresponding operation (step). For example, when it is described that a predetermined operation is performed when a predetermined condition is satisfied, the image encoding apparatus or the image decoding apparatus may perform an operation to check whether the predetermined condition is satisfied before performing the predetermined operation.

The various embodiments of the present disclosure are not a listing of all possible combinations but are provided to illustrate representative aspects of the disclosure, and the elements described in the various embodiments may be applied independently or in combination with two or more elements.

Additionally, the various embodiments of the present disclosure may be implemented using hardware, firmware, software, or a combination thereof, etc. When implemented in hardware, the various embodiments may be implemented using one or more Application-Specific Integrated Circuits (ASICs), Digital Signal Processors (DSPs), Digital Signal Processing Devices (DSPDs), Programmable Logic Devices (PLDs), Field Programmable Gate Arrays (FPGAs), general-purpose processors, controllers, microcontrollers, or microprocessors.

Additionally, the image decoding apparatus and the image encoding apparatus to which the embodiments of the present disclosure are applied may be included in various devices such as a multimedia broadcasting transmission/reception device, a mobile communication terminal, a home cinema video device, a digital cinema video device, a surveillance camera, a video conferencing device, a real-time communication device such as a video communication device, a mobile streaming device, a storage medium, a camcorder, a video-on-demand (VoD) service providing device, an over-the-top (OTT) video device, an internet streaming service providing device, a three-dimensional (3D) video device, a video telephony device, and a medical video device, and may be used for processing video signals or data signals. For example, an over the top (OTT) video device may include a game console, a Blu-ray player, an internet-connected TV, a home theater system, a smartphone, a tablet PC, and a digital video recorder (DVR), etc.

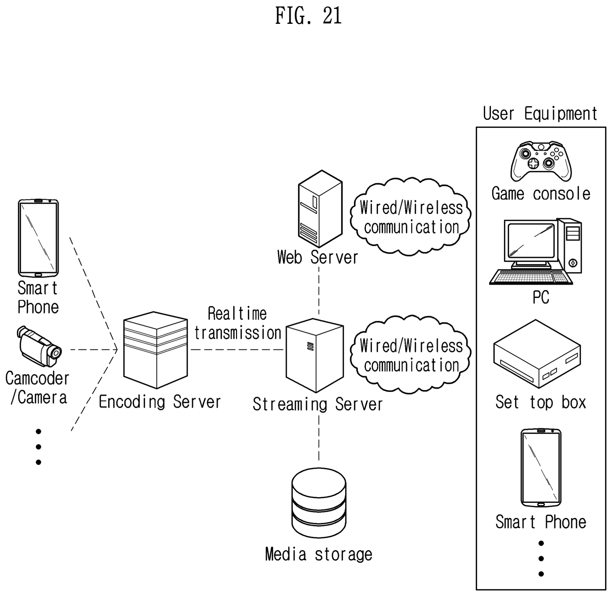

FIG. 21 shows an exemplary diagram of a content streaming system to which an embodiment of the present disclosure may be applied.

As shown in FIG. 21, the content streaming system to which an embodiment of the present disclosure is applied may broadly include an encoding server, a streaming server, a web server, a media storage, a user device, and a multimedia input device.

The encoding server compresses content input from multimedia input devices such as a smartphone, camera, or camcorder into digital data, generating a bitstream and transmitting it to the streaming server. As another example, when multimedia input devices such as a smartphone, camera, or camcorder directly generate a bitstream, the encoding server may be omitted.

The bitstream may be generated by the video encoding method and/or the image encoding apparatus to which an embodiment of the present disclosure is applied, and the streaming server may temporarily store the bitstream during the process of transmitting or receiving the bitstream.

The streaming server may transmit multimedia data to a user device based on a user request through the web server, and the web server may serve as an intermediary that informs user of available service. When a user requests a desired service from the web server, the web server may send the request to the streaming server, and the streaming server may transmit the multimedia data to the user. In this case, the content streaming system may include a separate control server, and in this case, a control server may function to control command/response exchanges between devices within the content streaming system.

The streaming server may receive content from a media storage and/or an encoding server. For example, when receiving content from the encoding server, the content may be received in real time. In this case, to provide a seamless streaming service, the streaming server may store the bitstream for a certain period of time.

Examples of the user device may include a mobile phone, a smartphone, a laptop computer, a digital broadcasting terminal, a personal digital assistant (PDA), a portable multimedia player (PMP), a navigation device, a slate PC, a tablet PC, an ultrabook, a wearable device (i.e., a smartwatch, a smart glass, a head-mounted display (HMD)), a digital TV, a desktop computer, and digital signage.

Each server within the content streaming system may be operated as a distributed server, in which case the data received by each server may be processed in a distributed manner.

The range of the present disclosure includes software or machine-executable instructions (i.e., an operating system, an application, firmware, a program, etc.) that enable operations according to the methods of various embodiments to be executed on a device or computer, and a non-transitory computer-readable medium in which such software or instructions are stored and executable on a device or computer.

[Industrial Applicability]

The embodiments of the present disclosure may be used for encoding/decoding an image.

## Claims

1. An image decoding method performed by an image decoding apparatus, comprising:

   determining an intra prediction mode of a current block; and
   generating a prediction block of the current block by performing an intra prediction based on the determined intra prediction mode,
   wherein the intra prediction mode is determined based on range restriction information representing whether the intra prediction mode is restricted within a specific range, and
   wherein based on the range restriction information representing that the intra prediction mode is restricted within the specific range, the intra prediction is performed mainly using a reference sample within a predetermined range among available reference samples of the current block based on the intra prediction mode determined as one of intra prediction modes within the specific range.

2. The method of Claim 1, wherein based on the reference sample within the predetermined range being mainly used, the intra prediction mode is determined as one directional mode within the specific range.

3. The method of Claim 2, wherein the specific range is determined based on whether the intra prediction is based on an wide angle intra prediction.

4. The method of Claim 2, wherein the specific range is any one of directional mode ranges 50 to 66, 35 to 66, or 19 to 34.

5. The method of Claim 2, wherein the specific range is any one of directional mode ranges 2 to 18, 2 to 33, or 18 to 49.

6. The method of Claim 1, wherein the prediction block is generated by weighted summing a first prediction block obtained by mainly using a reference sample in a first range and a second prediction block obtained by mainly using a reference sample in a second range.

7. The method of Claim 6, wherein the first range and the second range do not overlap each other.

8. The method of Claim 6, wherein a first weight applied to the first prediction block is determined differently from a weight applied to the second prediction block.

9. The method of Claim 8, wherein the first weight is determined based on a size of the current block.

10. The method of Claim 8, wherein the first weight and the second weight are predefined values.

11. An image encoding method performed by an image encoding apparatus, comprising:

    determining an intra prediction mode of a current block; and
    encoding prediction mode information of the current block based on the determined intra prediction mode,
    wherein the intra prediction mode is determined based on whether the intra prediction mode is restricted within a specific range, and
    wherein based on the intra prediction mode being restricted within the specific range, an intra prediction of the current block is performed mainly using a reference sample within a predetermined range among available reference samples of the current block based on the intra prediction mode determined as one of intra prediction modes within the specific range.

12. A computer-readable medium storing a bitstream generated by the image encoding method of Claim 11.

13. A method for transmitting a bitstream generated by an image encoding method, the image encoding method comprising:

determining an intra prediction mode of a current block; and
encoding prediction mode information of the current block based on the determined intra prediction mode,
wherein the intra prediction mode is determined based on whether the intra prediction mode is restricted within a specific range, and
wherein based on the intra prediction mode being restricted within the specific range, an intra prediction of the current block is performed mainly using a reference sample within a predetermined range among available reference samples of the current block based on the intra prediction mode determined as one of intra prediction modes within the specific range.

FIG.1

FIG.2

IMAGE ENCODING APPARATUS 100

INPUT IMAGE → IMAGE PARTITIONER 110

TRANSFORMER 120

QUANTIZER 130

ENTROPY ENCODER 190 → BITSTREAM

115

DEQUANTIZER 140

INVERSE TRANSFORMER 150

155

INTER PREDICTOR 180

INTRA PREDICTOR 185

DPB / MEMORY 170

FILTER 160

FIG.3

IMAGE DECODING APPARATUS 200

BITSTREAM → ENTROPY DECODER 210 → DEQUANTIZER 220 → INVERSE TRANSFORMER 230 → (+) 235 → FILTER 240 → RECONSTRUCTED IMAGE

MEMORY / DPB 250

INTRA PREDICTOR 265

INTER PREDICTOR 260

FIG.4

```
            ┌─────────┐
            │  START  │
            └────┬────┘
                 │
                 ▼
┌───────────────────────────────────────┐
│          CONSTRUCT MPM LIST            │─── S400
└───────────────────┬───────────────────┘
                    │
                    ▼
┌───────────────────────────────────────┐
│ DETERMINE INTRA PREDICTION MODE OF     │─── S410
│           CURRENT BLOCK                │
└───────────────────┬───────────────────┘
                    │
                    ▼
┌───────────────────────────────────────┐
│     ENCODE INTRA PREDICTION MODE       │
│           INFORMATION                  │
│ (INCLUDING MPM FLAG, NOT PLANAR FLAG,  │─── S420
│  MPM IDX AND/OR REMAINING INTRA        │
│     PREDICTION MODE INFORMATION)       │
└───────────────────┬───────────────────┘
                    │
                    ▼
              ┌─────────┐
              │   END   │
              └─────────┘
```

FIG. 5

```
                        ( START )
                            │
                            ▼
┌──────────────────────────────────────────────────┐
│  OBTAIN INTRA PREDICTION MODE INFORMATION (INCLUDING│
│  MPM FLAG, NOT PLANAR FLAG, MPM IDX AND/OR REMAINING│ ─── S510
│  INTRA PREDICTION MODE INFORMATION) FROM BITSTREAM  │
└──────────────────────────────────────────────────┘
                            │
                            ▼
┌──────────────────────────────────────────────────┐
│              CONSTRUCT MPM LIST                     │ ─── S520
└──────────────────────────────────────────────────┘
                            │
                            ▼
┌──────────────────────────────────────────────────┐
│     DETERMINE INTRA PREDICTION MODE OF CURRENT     │
│  BLOCK BASED ON MPM LIST AND INTRA PREDICTION MODE │ ─── S530
│                  INFORMATION                        │
└──────────────────────────────────────────────────┘
                            │
                            ▼
                         ( END )
```

FIG. 6

FIG. 7

(a)

(b)

FIG. 8

The current block

FIG. 9

(a)

(b)

EP 4 651 480 A1

FIG. 10

Start

Set intra prediction mode candidate
associated with above reference sample — S1010

Determine whether
intra prediction mode
of current block is
specific mode — S1020

N

Y

Apply intra prediction to current block based
on modified prediction mode — S1030

Apply selected intra prediction mode
to current block as is — S1040

End

FIG. 11

(a)

0:Planar
1:DC

(b)

FIG. 12

FIG. 13

(a)

(b)

# FIG. 14

Start

Set intra prediction mode candidate associated with left reference sample — S1410

Determine whether intra prediction mode of current block is specific mode — S1420

N

Y

Apply intra prediction to current block based on modified prediction mode — S1430

Apply selected intra prediction mode to current block as is — S1440

End

FIG. 15

(a)                    +                    (b)

FIG. 16

FIG. 17

(a)

(b)

# FIG. 18

```
                    ┌──────────┐
                    │  Start   │
                    └────┬─────┘
                         │
                         ▼
    ┌────────────────────────────────────────────┐
    │        Generate intra prediction block       │
    │ based on reference sample and associated intra │──── S1810
    │              prediction mode                 │
    └────────────────────┬───────────────────────┘
                         │
                         ▼
    ┌────────────────────────────────────────────┐
    │        Determine weight to be applied to     │
    │             each prediction block            │──── S1820
    └────────────────────┬───────────────────────┘
                         │
                         ▼
    ┌────────────────────────────────────────────┐
    │           Fuse intra prediction blocks       │
    │          based on determined weight          │──── S1830
    └────────────────────┬───────────────────────┘
                         │
                         ▼
                    ┌──────────┐
                    │   End    │
                    └──────────┘
```

FIG. 19

FIG. 20

```
        ┌─────────┐
        │  Start  │
        └─────────┘
             │
             ▼
┌──────────────────────────────────────────────┐
│ Determine intra prediction mode of current    │ ∼ S2010
│ block                                          │
└──────────────────────────────────────────────┘
             │
             ▼
┌──────────────────────────────────────────────┐
│ Encode intra prediction mode information of    │ ∼ S2020
│ current block                                  │
└──────────────────────────────────────────────┘
             │
             ▼
        ┌─────────┐
        │   End   │
        └─────────┘
```

FIG. 21

## INTERNATIONAL SEARCH REPORT

| International application No. |
| --- |
| **PCT/KR2024/000327** |

| A. | CLASSIFICATION OF SUBJECT MATTER |
| --- | --- |
| | **H04N 19/11**(2014.01)i; **H04N 19/593**(2014.01)i; **H04N 19/105**(2014.01)i; **H04N 19/132**(2014.01)i; **H04N 19/176**(2014.01)i |

According to International Patent Classification (IPC) or to both national classification and IPC

| B. | FIELDS SEARCHED |
| --- | --- |

Minimum documentation searched (classification system followed by classification symbols)

H04N 19/11(2014.01); H04N 19/105(2014.01); H04N 19/132(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 화면 내(intra), 예측(prediction), 모드(mode), 참조(reference), 샘플(sample), 범위 (range), 방향성(directional), 가중치(weight)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2023-0002091 A (KT CORPORATION) 05 January 2023 (2023-01-05)<br>See paragraphs [0163], [0196], [0201] and [0250]; claim 7; and figure 24. | 1-2,6-8,10-13 |
| Y | | 3-5,9 |
| Y | KR 10-2020-0125740 A (TENCENT AMERICA LLC) 04 November 2020 (2020-11-04)<br>See claims 1 and 7-8. | 3-5 |
| Y | KR 10-2022-0047682 A (LG ELECTRONICS INC.) 18 April 2022 (2022-04-18)<br>See paragraph [0071]. | 9 |
| A | KR 10-2021-0156256 A (INTELLECTUAL DISCOVERY CO., LTD.) 24 December 2021 (2021-12-24)<br>See paragraphs [0008]-[0009]; and claims 1-3. | 1-13 |
| A | KR 10-2022-0077095 A (HYUNDAI MOTOR COMPANY et al.) 08 June 2022 (2022-06-08)<br>See paragraphs [0011]-[0013]; and claims 1-11. | 1-13 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 April 2024** | **18 April 2024** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/000327**

| Patent document cited in search report | | | Publication date (day/month/year) | Patent family member(s) | | | Publication date (day/month/year) |
|---|---|---|---|---|---|---|---|
| KR | 10-2023-0002091 | A | 05 January 2023 | WO | 2023-277486 | A1 | 05 January 2023 |
| KR | 10-2020-0125740 | A | 04 November 2020 | CN | 110677677 | A | 10 January 2020 |
| | | | | EP | 3818707 | A1 | 12 May 2021 |
| | | | | JP | 2021-515491 | A | 17 June 2021 |
| | | | | JP | 7280887 | B2 | 24 May 2023 |
| | | | | KR | 10-2023-0026547 | A | 24 February 2023 |
| | | | | KR | 10-2023-0065389 | A | 11 May 2023 |
| | | | | KR | 10-2530377 | B1 | 10 May 2023 |
| | | | | US | 11533478 | B2 | 20 December 2022 |
| | | | | US | 2020-0007861 | A1 | 02 January 2020 |
| | | | | US | 2020-0366890 | A1 | 19 November 2020 |
| | | | | US | 2023-0012475 | A1 | 19 January 2023 |
| | | | | US | 2023-0060151 | A1 | 02 March 2023 |
| | | | | WO | 2020-009811 | A1 | 09 January 2020 |
| | | | | WO | 2020-009870 | A1 | 09 January 2020 |
| | | | | WO | 2020-010131 | A1 | 09 January 2020 |
| KR | 10-2022-0047682 | A | 18 April 2022 | AU | 2021-200247 | A1 | 18 March 2021 |
| | | | | CA | 3145758 | A1 | 19 April 2018 |
| | | | | CN | 109891892 | A | 14 June 2019 |
| | | | | EP | 3512201 | A1 | 17 July 2019 |
| | | | | JP | 2023-096116 | A | 06 July 2023 |
| | | | | JP | 7284318 | B2 | 30 May 2023 |
| | | | | KR | 10-2019-0042094 | A | 23 April 2019 |
| | | | | KR | 10-2023-0125341 | A | 29 August 2023 |
| | | | | KR | 10-2385396 | B1 | 11 April 2022 |
| | | | | KR | 10-2569476 | B1 | 24 August 2023 |
| | | | | US | 10638157 | B2 | 28 April 2020 |
| | | | | US | 2019-0320200 | A1 | 17 October 2019 |
| | | | | US | 2024-0048760 | A1 | 08 February 2024 |
| | | | | WO | 2018-070661 | A1 | 19 April 2018 |
| KR | 10-2021-0156256 | A | 24 December 2021 | KR | 10-2021-0023911 | A | 04 March 2021 |
| | | | | KR | 10-2023-0110695 | A | 25 July 2023 |
| KR | 10-2022-0077095 | A | 08 June 2022 | CN | 116530082 | A | 01 August 2023 |
| | | | | US | 2023-0300325 | A1 | 21 September 2023 |
| | | | | WO | 2022-119301 | A1 | 09 June 2022 |

Form PCT/ISA/210 (patent family annex) (July 2022)